# EUROPEAN PATENT SPECIFICATION

(11) **EP 4 458 066 B1**
(45) Date of publication and mention of the grant of the patent: **11.11.2026**
(21) Application number: 22938786.5
(22) Date of filing: 24.04.2022
(51) Int. Cl.: H04W 52/36, H04W 52/42, H04W 52/08, H04W 52/14, H04W 52/24, H04W 52/32

(54) **METHOD AND APPARATUS OF POWER HEADROOM REPORT (PHR) REPORTING**
VERFAHREN UND VORRICHTUNG ZUR MELDUNG VON LEISTUNGSRESERVEBERICHTEN (PHR)
PROCÉDÉ ET APPAREIL POUR RAPPORTER UN RAPPORT DE MARGE DE PUISSANCE (PHR)

(43) Date of publication of application: 06.11.2024
(73) Proprietor: Lenovo (Beijing) Limited, Beijing 100085 (CN)
(72) Inventor: LING, Wei, Beijing 100094 (CN); ZHANG, Yi, Beijing 100094 (CN); ZHU, Chenxi, Fairfax, Virginia 22033 (US); LIU, Bingchao, Beijing 100094 (CN); XIAO, Lingling, Beijing 100094 (CN)
(74) Representative: Openshaw & Co.
(86) International application number: PCT/CN2022/088703
(87) International publication number: WO 2023/205925

(56) References cited:
- WO-A1-2021/260658
- WO-A1-2022/067521
- WO-A1-2022/081290
- CN-A- 114 026 817
- US-A1- 2019 261 281
- US-A1- 2020 187 125
- APPLE INC: "On Beam Management Enhancement", vol. RAN WG1, no. e-Meeting; 20220221 - 20220303, 14 February 2022 (2022-02-14), XP052109704, Retrieved from the Internet <URL:https://ftp.3gpp.org/tsg_ran/WG1_RL1/TSGR1_108-e/Docs/R1-2201758.zip R1-2201758 On Beam Management Enhancement.docx> [retrieved on 20220214]
- ZTE: "Enhancements on Multi-beam Operation", vol. RAN WG1, no. e-Meeting; 20210816 - 20210827, 7 August 2021 (2021-08-07), XP052037862, Retrieved from the Internet <URL:https://ftp.3gpp.org/tsg_ran/WG1_RL1/TSGR1_106-e/Docs/R1-2106541.zip R1-2106541 Enhancements on multi-beam operation.docx> [retrieved on 20210807]
- NOKIA ET AL: "On UE features for further enhancements on NR-MIMO", vol. RAN WG1, no. e-Meeting; 20220117 - 20220125, 11 January 2022 (2022-01-11), XP052093336, Retrieved from the Internet <URL:https://ftp.3gpp.org/tsg_ran/WG1_RL1/TSGR1_107b-e/Docs/R1-2200622.zip R1-2200622 UE features FeMIMO.docx> [retrieved on 20220111]
- "3rd Generation Partnership Project; Technical Specification Group Radio Access Network; NR; Medium Access Control (MAC) protocol specification (Release 17)", vol. RAN WG2, no. V17.0.0, 14 April 2022 (2022-04-14), pages 1 - 221, XP052145972, Retrieved from the Internet <URL:https://ftp.3gpp.org/Specs/archive/38_series/38.321/38321-h00.zip 38321-h00.docx> [retrieved on 20220414]
- "3rd Generation Partnership Project; Technical Specification Group Radio Access Network; NR; Radio Resource Control (RRC) protocol specification (Release 17)", vol. RAN WG2, no. V17.0.0, 19 April 2022 (2022-04-19), pages 1 - 1221, XP052146036, Retrieved from the Internet <URL:https://ftp.3gpp.org/Specs/archive/38_series/38.331/38331-h00.zip 38331-h00.docx> [retrieved on 20220419]
- ZTE: "Enhancements on Multi-beam Operation", 3GPP TSG RAN WG1 MEETING #106BIS-E R1-2108870, 1 October 2021 (2021-10-01), XP052057746
- MODERATOR (SAMSUNG): "Moderator summary for multi-beam enhancement", 3GPP TSG RAN WG1 #106-E R1-2106864, 17 August 2021 (2021-08-17), XP052041773

## Description

### TECHNICAL FIELD

Embodiments of the present application generally relate to wireless communication technology, especially to a method and an apparatus of power headroom report (PHR) reporting for multiple transmit-receive point (TRP) (also referred to as multi-TRP, or M-TRP) transmission.

### BACKGROUND

Multi-TRP/panel transmission has been introduced into new radio (NR) since release 16 (Rel-16). During multi-TRP transmission, two or more TRPs (or panels) may be used to transmit data to a user equipment (UE) to improve reliability and robustness. In addition, enhancements on multiple-input multiple-output (MIMO) for NR are always discussed. A work item description (WID) approved on MIMO in NR Rel-17 includes enhancement on the support for multi-TRP deployment, targeting both frequency range (FR)1 and FR2. Wherein, a research topic is to identify and specify features to improve reliability and robustness for channels other than physical downlink shared channel (PDSCH), e.g., physical downlink control channel (PDCCH), physical uplink shared channel (PUSCH), and physical uplink control channel (PUCCH) using multi-TRP and/or multi-panel, with Rel-16 reliability features as the baseline.

Regarding PUSCH, it has been agreed that two power headroom reports can be reported for multi-TRP based PUSCH. For example, in Rel-17, up to two PHR reports are supported in M-TRP PUSCH based on spatial relation information beam indication where the two PHR reports are related to two repetitions of a PUSCH transmissions time divisional multiplexing (TDM) with different beams, and one PHR is supported based on the common beam framework. A "beam" can be represented by or associated with spatial relation information, TCI state, RS etc. However, multiple panel simultaneous uplink (UL) transmission will be discussed in Rel-18. That is, one or two PUSCH transmissions transmitted with two beams can be transmitted simultaneously.

Thus, there are still several technical problems concerning PHR reporting for multiple TRP based PUSCH needed to be solved, including but not being limited to: how to determine virtual PHR reporting in single-downlink control information (DCI) (S-DCI) based M-TRP PUSCH based on two common beams.

Apple, "On Beam Management Enhancement", R1- 2201758, 3GPP TSG-RAN WG1 Meeting #108-e, e-Meeting, Feb 21st - Mar 3rd, 2022, provides some discussion on remining issues on beam management enhancement. A number of proposals concerning unified TCI framework and TCI indication, L1/L2 centric inter-cell mobility, fast UL panel selection and MPE mitigation are made.

### SUMMARY OF THE APPLICATION

One objective of the embodiments of the present application is to provide a technical solution of PHR reporting, especially, a method and an apparatus of PHR reporting for multi-TRP transmission. The invention is defined by the appended independent claims.

According to some embodiments of the present application, a user equipment (UE) according to claim 1 is provided.

According to some other embodiments of the present application, a method according to claim 5 is provided.

In some embodiments of the present application, one PHR including one virtual PHR determined on a power control parameter set is transmitted, and a pathloss reference signal (RS) of the power control parameter set is associated with a first joint or uplink common TCI state in a lowest codepoint of at least one codepoint including at least one joint or uplink common TCI of the one or more codepoints.

In some embodiments of the present application, one PHR including one virtual PHR determined on a power control parameter set is transmitted, and a pathloss RS of the power control parameter set is associated with a joint or uplink common TCI state associated with a first sounding reference signal (SRS) resource set in a lowest codepoint of at least one codepoint indicating a joint or uplink common TCI state associated with the first SRS resource set, wherein, the first SRS resource set is a SRS resource set with a lower identifier (ID) of two SRS resource sets configured for PUSCH transmission in the activated BWP.

In some embodiments of the present application, one PHR including one virtual PHR determined on a power control parameter set is transmitted, and a pathloss RS of the power control parameter set is associated with a joint or uplink common TCI state associated with a first SRS resource set in a lowest codepoint of the at least one codepoint indicating two joint or uplink common TCI states, wherein, the first SRS resource set is a SRS resource set with a lower ID of two SRS resource sets configured for PUSCH transmission in the activated BWP.

In some embodiments of the present application, one PHR including one virtual PHR determined on a power control parameter set is transmitted, and a pathloss RS of the power control parameter set is associated with a joint or uplink common TCI state applicable for uplink transmission in the activated BWP in the slot, wherein, the joint or uplink common TCI state is only one joint or uplink common TCI state applicable for uplink transmission in the slot or a first joint or uplink common TCI state in a codepoint applicable for uplink transmission in the slot of the at least one codepoint indicating two joint or uplink common TCI states.

In some embodiments of the present application, one PHR including one virtual PHR determined on a power control parameter set is transmitted, and in the case that a joint or uplink common TCI state applicable for uplink transmission in the activated BWP in the slot is associated a first SRS resource set, a pathloss RS of the power control parameter set is associated with the joint or uplink common TCI state, wherein, the first SRS resource set is a SRS resource set with a lower ID of two SRS resource sets configured for PUSCH transmission in the activated BWP.

In some embodiments of the present application, a pathloss RS of the power control parameter set is a pathloss RS with an identifier being 0 in a pathloss RS list configured for PUSCH transmission in the activated BWP.

In some embodiments of the present application, one PHR including one virtual PHR determined on a power control parameter set is transmitted, and in the case that a first joint or uplink common TCI state in a lowest codepoint of at least one codepoint including at least one joint or uplink common TCI state of the one or more codepoints is associated with a set including p0, alpha, and closed loop index in a list of set including p0, alpha, and closed loop index configured for PUSCH transmission in the activated BWP, p0, alpha, and closed loop index of the power control parameter set are determined based on the set including p0, alpha, and closed loop index; otherwise, p0, alpha, and closed loop index of the power control parameter set are determined based on a set including p0, alpha, and closed loop index with an index being 0 in the list.

In some embodiments of the present application, one PHR including one virtual PHR determined on a power control parameter set is transmitted, and in the case that a joint or uplink common TCI state associated with a first SRS resource set in a lowest codepoint of at least one codepoint indicating a joint or uplink common TCI state associated with a first SRS resource set is associated with a set including p0, alpha, and closed loop index in a list of set including p0, alpha, and closed loop index configured for PUSCH transmission in the activated BWP, p0, alpha, and closed loop index of the power control parameter set are determined based on the set including p0, alpha, and closed loop index; otherwise, p0, alpha, and closed loop index of the power control parameter set are determined based on a set including p0, alpha, and closed loop index with an index being 0 in the list, wherein, the first SRS resource set is a SRS resource set with a lower ID of two SRS resource sets configured for PUSCH transmission in the activated BWP.

In some embodiments of the present application, one PHR including one virtual PHR determined on a power control parameter set is transmitted, and in the case that a joint or uplink common TCI state associated with a first SRS resource set in a lowest codepoint of the at least one codepoint indicating two joint or uplink common TCI states is associated a set including p0, alpha, and closed loop index in a set of set including p0, alpha, and closed loop index configured for PUSCH transmission in the activated BWP, p0, alpha, and closed loop index of the power control parameter set are determined based on the set including p0, alpha, and closed loop index; otherwise, p0, alpha, and closed loop index of the power control parameter set are determined based on a set including p0, alpha, and closed loop index with an index being 0 in the list, wherein, the first SRS resource set is a SRS resource set with a lower ID of two SRS resource sets configured for PUSCH transmission in the activated BWP.

In some embodiments of the present application, one PHR including one virtual PHR determined on a power control parameter set is transmitted, and in the case that a first joint or uplink common TCI state in a codepoint applicable for uplink transmission of the activated BWP in the slot is associated a set including p0, alpha, and closed loop index in a list of set including p0, alpha, and closed loop index configured for PUSCH transmission in the activated BWP, p0, alpha, and closed loop index of the power control parameter set are determined based on the set including p0, alpha, and closed loop index; otherwise, p0, alpha, and closed loop index of the power control parameter set are determined based on a set including p0, alpha, and closed loop index with an index being 0 in the list.

In some embodiments of the present application, one PHR including one virtual PHR determined on a power control parameter set is transmitted, and in the case that a joint or uplink common TCI state in a codepoint applicable for uplink transmission of the activated BWP in the slot is associated with a first SRS resource set and a set including p0, alpha, and closed loop index in a list of set including p0, alpha, and closed loop index configured for PUSCH transmission in the activated BWP, then p0, alpha, and closed loop index of the power control parameter set are determined based on the set including p0, alpha, and closed loop index; otherwise, p0, alpha, and closed loop index of the power control parameter set are determined based on a set including p0, alpha, and closed loop index with an index being 0 in the list, wherein, the first SRS resource set is a SRS resource set with a lower ID of two SRS resource sets configured for PUSCH transmission in the activated BWP.

In some embodiments of the present application, one PHR including one virtual PHR determined on a power control parameter set is transmitted, and p0, alpha, and closed loop index of the power control parameter set are determined based on a set including p0, alpha, and closed loop index with an index being 0 in a list of set including p0, alpha, and closed loop index configured for PUSCH transmission in the activated BWP.

In some embodiments of the present application, closed loop index of the power control parameter set is 0.

In some embodiments of the present application, two SRS resource sets are configured for PUSCH transmission in the activated BWP, and each SRS resource set is associated with a power control parameter set, wherein, a first pathloss RS of a first power control parameter set is associated a joint or uplink common TCI state associated with a first SRS resource set in a lowest codepoint of the at least one TCI codepoint indicating two joint or uplink common TCI states, and a second pathloss RS of a second power control parameter set is associated with a joint or uplink common TCI state associated with a second SRS resource set of two joint or uplink common TCI states in the lowest codepoint of the at least one TCI codepoint indicating two joint or uplink common TCI states, wherein, the first SRS resource set is a SRS resource set with a lower ID of the two SRS resource sets and the second SRS resource set is a SRS resource set with a higher ID of the two SRS resource sets.

In some embodiments of the present application, two SRS resource sets are configured for PUSCH transmission in the activated BWP, and each SRS resource set is associated with a power control parameter set, wherein, in the case that there are two joint or uplink common TCI states applicable for uplink transmission of the activated BWP in the slot, a first pathloss RS of a first power control parameter set is associated a joint or uplink common TCI state associated with a first SRS resource set of the two joint or uplink common TCI states, and a second pathloss RS of a second power control parameter set is associated with a joint or uplink common TCI state associated with a second SRS resource set of the two joint or uplink common TCI states; otherwise, the first pathloss RS of the first power control parameter set is associated a joint or uplink common TCI state associated with the first SRS resource set in a lowest codepoint of the at least one TCI codepoint indicating two joint or uplink common TCI states, and the second pathloss RS of the second power control parameter set is associated with a joint or uplink common TCI state associated with the second SRS resource set of two joint or uplink common TCI states with the lowest codepoint of the at least one TCI codepoint indicating two joint or uplink common TCI states, wherein, the first SRS resource set is a SRS resource set with a lower ID of the two SRS resource sets and the second SRS resource set is a SRS resource set with a higher ID of the two SRS resource sets.

In some embodiments of the present application, two SRS resource sets are configured for PUSCH transmission in the activated BWP, and each SRS resource set is associated with a power control parameter set, wherein, a first pathloss RS of a first power control parameter set is a pathloss RS with an ID being 0 in a pathloss RS list configured for PUSCH transmission in the activated BWP, and a second pathloss RS of a second power control parameter set is a pathloss RS with an ID being 1 in the pathloss RS list.

In some embodiments of the present application, two SRS resource sets are configured for PUSCH transmission in the activated BWP, and each SRS resource set is associated with a power control parameter set, wherein, for a first power control parameter set, in the case that a first joint or uplink common TCI state associated with a first SRS resource set in a lowest codepoint of the at least one TCI codepoint indicating two joint or uplink common TCI states is associated with a set including p0, alpha, and closed loop index in a list of set including p0, alpha, and closed loop index configured for PUSCH transmission in the activated BWP, p0, alpha, and closed loop index of the first power control parameter set are determined based on the set including p0, alpha, and closed loop index associated the first joint or uplink common TCI state; otherwise, p0, alpha, and closed loop index of the first power control parameter set are determined based on a set including p0, alpha, and closed loop index with an ID being 0 in the list; and for a second power control parameter set, in the case that a second joint or uplink common TCI state associated with a second SRS resource set in the lowest codepoint of the at least one TCI codepoint indicating two joint or uplink common TCI states is associated with a set including p0, alpha, and closed loop index in the list, p0, alpha, and closed loop index of the second power control parameter set are determined based on another set including p0, alpha, and closed loop index in the list associated with the second joint or uplink common TCI state; otherwise, p0, alpha, and closed loop index of the second power control parameter set are determined based on a set including p0, alpha, and closed loop index with an ID being 1 in the list, wherein, the first SRS resource set is a SRS resource set with a lower ID of the two SRS resource sets and the second SRS resource set is a SRS resource set with a higher ID of the two SRS resource sets.

In some embodiments of the present application, two SRS resource sets are configured for PUSCH transmission in the activated BWP, and each SRS resource set is associated with a power control parameter set, wherein, in the case that there are two joint or uplink common TCI states applicable for uplink transmission in the slot, for a first power control parameter set, in the case that a first joint or uplink common TCI state associated with a first SRS resource set of the two joint or uplink common TCI states is associated with a set including p0, alpha, and closed loop index in a list of set including p0, alpha, and closed loop index configured for PUSCH transmission in the activated BWP, p0, alpha, and closed loop index of the first power control parameter set are determined based on the set including p0, alpha, and closed loop index associated the first joint or uplink common TCI state; otherwise, p0, alpha, and closed loop index of the first power control parameter set are determined based on a set including p0, alpha, and closed loop index with an ID being 0 in the list; and for a second power control parameter set, in the case that a second joint or uplink common TCI state associated with a second SRS resource set of the two joint or uplink common TCI states is associated with a set including p0, alpha, and closed loop index in the list, p0, alpha, and closed loop index of the second power control parameter set are determined based on the set including p0, alpha, and closed loop index associated the second joint or uplink common TCI state; otherwise, p0, alpha, and closed loop index of the second power control parameter set are determined based on a set including p0, alpha, and closed loop index with an ID being 1 in the list. Otherwise, for the first power control parameter set, in the case that a first joint or uplink common TCI state associated with a first SRS resource set in a lowest codepoint of the at least one TCI codepoint indicating two joint or uplink common TCI states is associated with a set including p0, alpha, and closed loop index in the list, p0, alpha, and closed loop index of the first power control parameter set are determined based on the set including p0, alpha, and closed loop index associated the first joint or uplink common TCI state; otherwise, p0, alpha, and closed loop index of the first power control parameter set are determined based on the set including p0, alpha, and closed loop index with an ID being 0 in the list; and for the second power control parameter set, in the case that a second joint or uplink common TCI state associated with a second SRS resource set in the lowest codepoint of the at least one TCI codepoint indicating two joint or uplink common TCI states is associated with a set including p0, alpha, and closed loop index in the list, p0, alpha, and closed loop index of the second power control parameter set are determined based on a set including p0, alpha, and closed loop index in the list associated with the second joint or uplink common TCI state; otherwise, p0, alpha, and closed loop index of the second power control parameter set are determined based on the set including p0, alpha, and closed loop index with an ID being 1 in the list, wherein, the first SRS resource set is a SRS resource set with a lower ID of the two SRS resource sets and the second SRS resource set is a SRS resource set with a higher ID of the two SRS resource sets.

In some embodiments of the present application, two SRS resource sets are configured for PUSCH transmission in the activated BWP, and each SRS resource set is associated with a power control parameter set, wherein, p0, alpha, and closed loop index of a first power control parameter set are determined based on a set including p0, alpha, and closed loop index with an ID being 0 in a list of set including p0, alpha, and closed loop index configured for PUSCH transmission in the activated BWP, and p0, alpha, and closed loop index of a second power control parameter set are determined based on another set including p0, alpha, and closed loop index with an ID being 1 in the list.

In some embodiments of the present application, two SRS resource sets are configured for PUSCH transmission in the activated BWP, and each SRS resource set is associated with a power control parameter set, wherein, p0, alpha, and closed loop index of each power control parameter set are determined based on a set including p0, alpha, and closed loop index with an ID being 0 in a list of set including p0, alpha, and closed loop index configured for PUSCH transmission in the activated BWP.

In some embodiments of the present application, two SRS resource sets are configured for PUSCH transmission in the activated BWP, and each SRS resource set is associated with a power control parameter set, wherein, closed loop index of a first power control parameter set is determined as 0, and closed loop index of a second power control parameter set is determined as 0 the case of twoPUSCH-PC-AdjustmentStates not being configured, otherwise, closed loop index of the second power control parameter set is determined as 1 in the case of twoPUSCH-PC-AdjustmentStates being configured.

In some embodiments of the present application, two PHR including an actual PHR and a virtual PHR in the slot are transmitted, wherein, in the case that the actual PHR is determined based on PUSCH transmission associated with a first SRS resource set, the virtual PHR is associated with a second SRS resource set and determined based on a power control parameter set associated with the second SRS resource set, or in the case that the actual PHR is determined based on a PUSCH transmission associated with a second SRS resource set, the virtual PHR is associated with a first SRS resource set and determined based on a power control parameter set associated with the first SRS resource set, wherein, the first SRS resource set is a SRS resource set with a lower ID of two SRS resource sets configured for PUSCH transmission in the activated BWP and the second SRS resource set is a SRS resource set with a higher ID of the two SRS resource sets.

In some embodiments of the present application, two PHR including two virtual PHRs in the slot, wherein, the two virtual PHRs are transmitted based on a first power control parameter set associated with a first SRS resource set of two SRS resource sets configured for PUSCH transmission in the activated BWP and a second power control parameter set associated with the other SRS resource set of the two SRS resource sets.

In some embodiments of the present application, each joint or uplink common TCI state in the one or more codepoints is associated with a SRS resource set of two SRS resource sets configured for the BWP by radio resource control (RRC) signaling, medium access control (MAC) control element (CE) or DCI.

Some embodiments of the present application provide a base station according to claim 9 and a method performed by a base station according to claim 10.

Embodiments of the present application provide a technical solution of PHR reporting for multi-TRP transmission, supporting PHRs for multi-TRP based PUSCH in common beam framework, and thus can enhance reliability and robustness for multi-TRP based PUSCH.

### BRIEF DESCRIPTION OF THE DRAWINGS

In order to describe the manner in which advantages and features of the application can be obtained, a description of the application is rendered by reference to specific embodiments thereof, which are illustrated in the appended drawings. These drawings depict only example embodiments of the application and are not therefore to be considered limiting of its scope.
FIG. 1 is a schematic diagram illustrating an exemplary wireless communication system according to an embodiment of the present application.
FIG. 2 illustrates a flow chart of a method of PHR reporting according to some embodiments of the present application.
FIG. 3 illustrates a block diagram of an apparatus of PHR reporting according to some embodiments of the present application.
FIG. 4 illustrates a block diagram of an apparatus of PHR reporting according to some other embodiments of the present application.

### DETAILED DESCRIPTION

The detailed description of the appended drawings is intended as a description of preferred embodiments of the present application, and is not intended to represent the only form in which the present application may be practiced. It should be understood that the same or equivalent functions may be accomplished by different embodiments that are intended to be encompassed within the scope of the present application.

Reference will now be made in detail to some embodiments of the present application, examples of which are illustrated in the accompanying drawings. To facilitate understanding, embodiments are provided under specific network architecture and new service scenarios, such as 3rd generation partnership project (3GPP) 5G, 3GPP long term evolution (LTE) Release 8 and so on. It is contemplated that along with the developments of network architectures and new service scenarios, all embodiments in the present application are also applicable to similar technical problems. Moreover, the terminologies recited in the present application may change, which should not affect the principle of the present application.

A wireless communication system generally includes one or more base stations (BSs) and one or more UE. Furthermore, a BS may be configured with one TRP (or panel) or more TRPs (or panels). A TRP can act like a small BS. The TRPs can communicate with each other by a backhaul link. Such backhaul link may be an ideal backhaul link or a non-ideal backhaul link. Latency of the ideal backhaul link may be deemed as zero, and latency of the non-ideal backhaul link may be tens of milliseconds and much larger, e.g., on the order of tens of milliseconds, than that of the ideal backhaul link.

In a wireless communication system, a single TRP can be used to serve one or more UE under the control of a BS. In different scenarios, a TRP may be referred to as different terms. Persons skilled in the art should understand that as 3GPP and the communication technology develop, the terminologies recited in the specification may change, which should not affect the scope of the present application. It should be understood that the TRP(s) (or panel(s)) configured for the BS may be transparent to a UE.

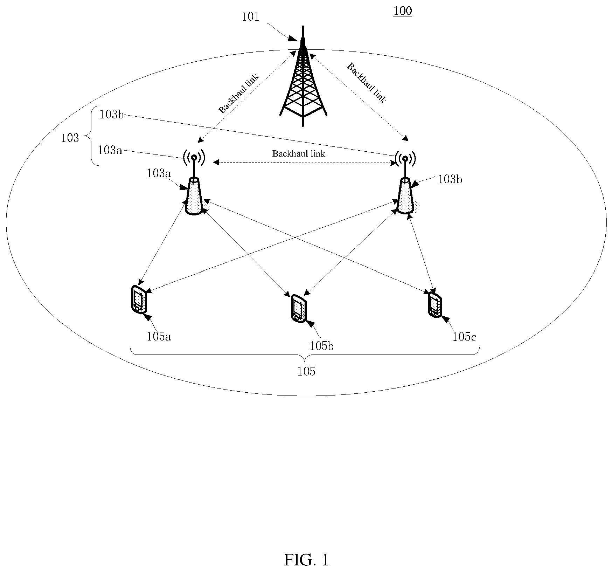

FIG. 1 is a schematic diagram illustrating an exemplary wireless communication system 100 according to some embodiments of the present application.

Referring to FIG. 1, a wireless communication system 100 can include a base station (BS) 101, TRPs 103 (e.g., a first TRP 103a and a second TRP 103b), and UEs 105 (e.g., a first UE 105a, a second UE 105b, and a third UE 105c). Although only one base station 101, two TRPs 103 and three UEs 105 are shown for simplicity, it should be noted that the wireless communication system 100 may include more or less communication device(s) or apparatus in accordance with some other embodiments of the present application.

In some embodiments of the present application, a BS 101 may be referred to as an access point, an access terminal, a base, a base unit, a macro cell, a Node-B, an evolved Node B (eNB), a gNB, an ng-eNB, a Home Node-B, a relay node, or a device, or described using other terminology used in the art. The UEs 105 (for example, the first UE 105a, the second UE 105b, and the third UE 105c) may include, for example, but is not limited to, a computing device, a wearable device, a mobile device, an IoT device, a vehicle, etc.

The TRPs 103, for example, the first TRP 103a and the second TRP 103b can communicate with the base station 101 via, for example, a backhaul link. Each of TRPs 103 can serve some or all of UEs 105. As shown in FIG. 1, the first TRP 103a can serve some mobile stations (which include the first UE 105a, the second UE 105b, and the third UE 105c) within a serving area or region (e.g., a cell or a cell sector). The second TRP 103b can serve some mobile stations (which include the first UE 105a, the second UE 105b, and the third UE 105c) within a serving area or region (e.g., a cell or a cell sector). The first TRP 103a and the second TRP 103b can communicate with each other via, for example, a backhaul link.

A multi-TRP transmission (or operation) may refer to at least two TRPs (or panels) to transmit data to a UE. As shown in FIG. 1, for the same UE 105 (e.g., the first UE 105a, the second UE 105b, or the third UE 105c), two TRPs (e.g., the first TRP 103a and the second TRP 103b) may both transmit data to it, which is an exemplary scenario of multi-TRP transmission.

According to a WID approved on MIMO in NR Rel-18, Rel-17 unified TCI framework, i.e., common beam framework will be applied for multiple TRPs. Therefore, up to 2 common beams will be indicated by DCI in a PDCCH or a MAC CE. Hereafter, DCI in a PDCCH is also referred to a DCI. However, only one PHR is supported in common beam framework according to Rel-17 agreements. In addition, PUSCH transmission considering multiple panel simultaneous UL transmission in S-DCI based M-TRP based on common beam framework will be studied in Rel-18.

Regarding PHR reporting related to multi-TRP PUSCH, it is agreed that UE optional capability for a UE that supports multi-TRP PUSCH will be: calculating two PHRs (at least corresponding to the carrier component (CC) that applies M-TRP PUSCH repetitions), each associated with a first PUSCH occasion to each TRP, and reporting two PHRs. That is, two PHRs can be reported for multi-TRP based PUSCH. A PHR may be an actual PHR or a virtual PHR.

Regarding actual Type 1 PHR (i.e., PHR for PUSCH), an actual Type 1 PHR report is drafted in TS38.213 as shown in the following:
"If a UE determines that a Type 1 power headroom report for an activated serving cell is based on an actual PUSCH transmission then, for PUSCH transmission occasion *i* on active UL BWP *b* of carrier *f* of serving cell *c,* the UE computes the Type 1 power headroom report as ${PH}_{type 1 , b , f , c} \left(i, j, {q}_{d}, l\right) = {P}_{CMAX , f , c} \left(i\right) - \left\{{P}_{O _ PUSCH , b , f , c}\left(j\right)+10{log}_{10}\left({2}^{μ}⋅{M}_{RB , b , f , c}^{PUSCH}\left(i\right)\right)+{α}_{b , f , c}\left(j\right)⋅{PL}_{b , f , c}\left({q}_{d}\right)+{Δ}_{TF , b , f , c}\left(i\right)+{f}_{b , f , c}\left(i, l\right)\right\}$ [dB]
where *P*_{CMAX*,f,c*}(*i*), *P*_{O*_*PUSCH*,b,g,c*}(*j*), ${M}_{RB , b , f , c}^{PUSCH} \left(i\right)$, *α_{b,f,c}*(*j*)*, PL_{b,f,c}*(*q_{d}*), Δ_{TF,*b*,*f*,*c*}(*i*) and *f_{b,f,c}*(*i, l*) are defined in clause 7.1.1.
If a UE is configured with multiple cells for PUSCH transmissions, where a SCS configuration *µ*₁ on active UL BWP *b*₁ of carrier *f*₁ of serving cell *c*₁ is smaller than a SCS configuration *µ*₂ on active UL BWP *b*₂ of carrier *f*₂ of serving cell *c*₂, and if the UE provides a Type 1 power headroom report in a PUSCH transmission in a slot on active UL BWP *b*₁ that overlaps with multiple slots on active UL BWP *b*₂, the UE provides a Type 1 power headroom report for the first PUSCH, if any, on the first slot of the multiple slots on active UL BWP *b*₂ that fully overlaps with the slot on active UL BWP *b*₁. If a UE is configured with multiple cells for PUSCH transmissions, where a same SCS configuration on active UL BWP *b*₁ of carrier *f*₁ of serving cell *c*₁ and active UL BWP *b*₂ of carrier *f*₂ of serving cell *c*₂, and if the UE provides a Type 1 power headroom report in a PUSCH transmission in a slot on active UL BWP *b*₁, the UE provides a Type 1 power headroom report for the first PUSCH, if any, on the slot on active UL BWP *b*₂ that overlaps with the slot on active UL BWP *b*₁.
If a UE is configured with multiple cells for PUSCH transmissions and provides a Type 1 power headroom report in a PUSCH transmission with PUSCH repetition Type B having a nominal repetition that spans multiple slots on active UL BWP *b*₁ and overlaps with one or more slots on active UL BWP *b*₂, the UE provides a Type 1 power headroom report for the first PUSCH, if any, on the first slot of the one or more slots on active UL BWP *b*₂ that overlaps with the multiple slots of the nominal repetition on active UL BWP *b*₁."

Regarding virtual Type 1 PHR, a virtual Type 1 PHR report is drafted in TS38.213 as shown in the following:
If the UE determines that a Type 1 power headroom report for an activated serving cell is based on a reference PUSCH transmission then, for PUSCH transmission occasion *i* on active UL BWP *b* of carrier *f* of serving cell *c,* the UE computes the Type 1 power headroom report as ${PH}_{type 1 , b , f , c} \left(i, j, {q}_{d}, l\right) = {{P}^{˜}}_{CMAX , f , c} \left(i\right) - \left\{{P}_{O _ PUSCH , b , f , c}\left(j\right)+{α}_{b , f , c}\left(j\right)⋅{PL}_{b , f , c}\left({q}_{d}\right)+{f}_{b , f , c}\left(i, l\right)\right\}$ [dB]
where *P̃*_{CMAX,*f*,*c*}(*i*) is computed assuming MPR=0 dB, A-MPR=0 dB, P-MPR=0 dB. T_{C} = 0 dB. MPR, A-MPR, P-MPR and T_{C} are defined in [8-1, TS 38.101-1], [8-2, TS38.101-2] and [8-3, TS 38.101-3]. The remaining parameters are defined in clause 7.1.1 where *P*_{O*_*PUSCH*,b,f,c*}(*j*) and *α_{b,f,c}*(*j*)
are obtained using *P*_{O_NOMINAL,PUSCH,*f*,*c*}(0) and *p0-PUSCH-AlphaSetId =* 0, *PL_{b,f,c}*(*q_{d}*) is obtained using *pusch-PathlossReferenceRS-Id* = 0, and *l* = 0.

The same specification also recites:
"If a UE transmits a PUSCH associated with a first RS resource index *q_{d}*, as described in clause 7.1.1, on active UL BWP *b* of carrier *f* of serving cell c in slot *n* and is provided *twoPHRMode,* the UE provides a Type 1 power headroom report for PUSCH repetition associated with a second RS resource index *q_{d}*, as described in clause 7.1.1, where
- if the UE provides a Type 1 power headroom report for an actual PUSCH repetition associated with the first RS resource index *q_{d}*,
   - if the UE transmits PUSCH repetitions associated with the second RS resource index *q_{d}* in slot n, the UE provides a Type 1 power headroom report for a first actual PUSCH repetition associated with the second RS resource index *q_{d}* that overlaps with slot *n*
   - otherwise, the UE provides a Type 1 power headroom report for a reference PUSCH transmission associated with the second RS resource index *q_{d}*
- otherwise, if the UE provides a Type 1 power headroom report for a reference PUSCH transmission associated with the first RS resource index *q_{d}*, the UE provides a Type 1 power headroom report for a reference PUSCH transmission associated with the second RS resource index *q_{d}*."

It can be seen from the specification that, two PHRs can be supported in S-DCI based multi-TRP PUSCH transmission where different repetitions of a PUSCH transmission are transmitted with different beams. If a two-PHR mode is not enabled or not configured, then only one PHR is reported. Meanwhile, under the common beam framework according to Rel-17 agreements, only one PHR is supported currently.

In addition, it is known that virtual PHR is calculated based on a power control parameter set according to the legacy specification. However, the power control parameter set for one virtual PHR based on Rel-17 common beam framework has not been defined yet in R17. According to Rel-17 common beam framework, pathloss RS for PUSCH is associated or included in a joint or uplink common TCI state, while the power control parameter set except for pathloss RS, e.g., p0, alpha and closed loop index can be optionally associated with a joint or uplink common TCI state according to a RRC signaling. In Rel-18, one or two virtual PHRs may need to be determined in S-DCI based M-TRP which is not discussed yet.

In conclusion, how to report PHR in S-DCI based M-TRP based on common beam framework considering multiple panel simultaneous UL transmission is not settled and will be discussed.

At least for solving the above technical problems, embodiments of the present application provide a technical solution of PHR reporting, e.g., a method and an apparatus of PHR reporting for multi-TRP based PUSCH. Herein, only virtual PHR is discussed.

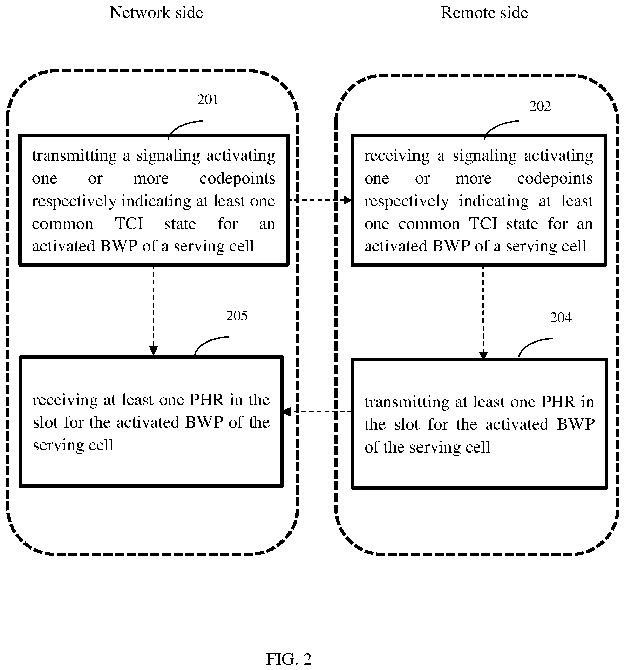

FIG. 2 illustrates a flow chart of a method of PHR reporting according to some embodiments of the present application. Although the method is illustrated in a system level by a UE in a remote side (or UE side) and a BS in a network side (or BS side), persons skilled in the art can understand that the method implemented in the remote side and that implemented in the network side can be separately implemented and incorporated by other apparatus with similar functions. In addition, no transmission or reception failure is considered in the illustrated embodiments of the present application.

Referring to FIG. 2, the network side, e.g., a gNB may transmit a signaling, e.g., a MAC CE activating one or more codepoints respectively indicating at least one common TCI state for an activated BWP of a serving cell to the remote side, e.g., to a UE in step 201, and the UE will receive the signaling in step 202.

For S-DCI based M-TRP PUSCH, at least one codepoint of the MAC CE activating joint or uplink common TCI states includes (or contains or indicates) two joint or uplink common TCI states. For example, the gNB may indicate two joint or uplink common TCI state in a codepoint (e.g., TCI codepoint) of a MAC CE activating common TCI states. In the case that more than one codepoint is included in the MAC CE, a DCI may be further indicated to the UE by the gNB, and the two joint or uplink common TCI states in the TCI codepoint is indicated by the DCI. In the case that only one codepoint is included in the MAC CE, the two joint or uplink common TCI states in the TCI codepoint is indicated by the MAC CE itself and no DCI is needed. In this view, at least one joint or uplink common TCI state in a TCI codepoint of a MAC CE is indicated by a DCI or MAC CE. In addition, for two joint or uplink common TCI states in a codepoint, they are respectively identified as the first joint or uplink common TCI state and the second joint or uplink common TCI state in the codepoint in sequence. In the case that there is only one joint or uplink common TCI state in a codepoint, the only one TCI state is the first joint or uplink common TCI state in the codepoint. In addition, in some scenarios, a joint or uplink common TCI state can be associated with a SRS resource set by a RRC signaling or MAC CE or DCI.

The UE will calculate (or determine) at least one PHR in a slot for the activated BWP in response to a PHR trigger event, which is indicated by an upper layer, e.g., MAC layer in the UE. Considering only virtual PHR being discussed herein, the at least one PHR includes at least one virtual Type 1 PHR, which is determined at least according to a power control parameter set (also referred to a default power control parameter set). The UE will transmit or report the calculated at least one PHR, e.g., in a PHR MAC CE to the gNB in step 204, e.g., carried by a PUSCH transmission. Accordingly, the gNB will receive the at least one PHR in step 205, e.g., included in the PHR MAC CE.

For example, the UE is indicated to report one or more Type 1 PHRs (i.e., PHR for PUSCH) for an activated BWP of a serving cell in a slot to the gNB, e.g., by a RRC signaling. In the case that there is no actual PUSCH transmission meeting the timeline for determining an actual PHR in the slot which is specified in TS38.213 below, then a virtual PHR will be reported as follows:
*"A UE determines whether a power headroom report for an activated serving cell [11, TS 38.321] is based on an actual transmission or a reference format based on the higher layer signaling of configured grant and periodic*/*semi-persistent sounding reference signal transmissions and downlink control information the UE received until and including the PDCCH monitoring occasion where the UE detects the first DCI format scheduling an initial transmission of a transport block since a power headroom report was triggered if the power headroom report is reported on a PUSCH triggered by the first DCI format. Otherwise, a UE determines whether a power headroom report is based on an actual transmission or a reference format based on the higher layer signaling of configured grant and periodic*/*semi-persistent sounding reference signal transmissions and downlink control information the UE received until the first uplink symbol of a configured PUSCH transmission minus T'proc,2=Tproc,2 where Tproc,2 is determined according to [6, TS 38.214] assuming d2,1 = 1, d2,2=0, and with µDL corresponding to the subcarrier spacing of the active downlink BWP of the scheduling cell for a configured grant if the power headroom report is reported on the PUSCH using the configured grant."*

Regarding a power control parameter set for each virtual PHR, it mainly includes: pathloss RS, and other power control parameters except for pathloss RS, e.g., p0, alpha, and closed loop index. That is, a power control parameter set is composed of a pathloss RS and other power control parameters except for the pathloss RS. A power control parameter set may be associated with a SRS resource set. For example, in the case that there are two power control parameter sets and two SRS resource sets configured for PUSCH transmission in the activated BWP, a first power control parameter set of the two power control parameter sets is associated with a SRS source set with a lower ID of the two SRS resource sets (hereafter, referred to as the first SRS resource set), and a second power control parameter set of the two power control parameter sets is associated with a SRS source set with a higher ID of the two SRS resource sets (hereafter, referred to as the second SRS resource set).

Specifically, considering that multiple panel simultaneous uplink transmission is supported in S-DCI based M-TRP and two joint or uplink common TCI states are indicated by a DCI or a MAC CE for PUSCH for an activated BWP of a serving cell, specific schemes of PHR reporting will be illustrated in detail in view of different scenarios according to some embodiments of the present application. In addition, the embodiments are illustrated under the premise that a MAC CE or the like activates one or more codepoints respectively indicating at least one common TCI state for an activated BWP of a serving cell, wherein, at least one codepoint of the one or more codepoints indicates two joint or uplink common TCI states.

### Scenario 1: only one PHR to be reported

In some scenarios, the UE is indicated to report only one PHR, e.g., by a RRC signaling. For example, the parameter "twoPHRMode" is disabled or not configured. That is, the UE needs to provide one Type 1 PHR for an activated BWP of a serving cell in a slot according to a PHR triggering event. The PHR can be reported in a legacy procedure as specified in TS38.213 in a PHR MAC CE. Herein, the one PHR is a virtual PHR, which is determined based on a power control parameter set. Thus, some embodiments of the present application will be illustrated on how to determine the power control parameter set, including determining pathloss RS and other parameters except the pathloss RS, to further determine the virtual PHR.

### Determination of Pathloss RS

When there is only one PHR to be reported in a slot for an active BWP of a serving cell, where a virtual PHR is determined in the slot, the pathloss RS of the power control parameter set can be determined in various manners according to some embodiments of the present application.

For example, in some embodiments of the present application, the pathloss RS is associated with (including the scenario of being included in) with a joint or uplink common TCI state with the lowest codepoint of at least one codepoint indicating at least one joint or uplink common TCI state. If the lowest codepoint contains two joint or uplink common TCI states, then the pathloss RS is associated with the first joint or uplink common TCI state in the lowest codepoint of the at least one codepoint indicating at least one joint or uplink common TCI state. That is, regardless one or two joint or uplink TCI states in the lowest point, the pathloss RS of the power control parameter set is associated with the first joint or uplink common TCI state in the lowest codepoint.

In some other embodiments of the present application, the pathloss RS of the power control parameter set is associated with a joint or uplink common TCI state associated with the first SRS resource set in the lowest codepoint of at least one codepoint indicating a joint or uplink common TCI state associated with the first SRS resource set. As stated above, the joint or uplink common TCI state can be associated with the first SRS resource set of two SRS resource sets by a RRC signaling or MAC CE or DCI.

In some yet other embodiments of the present application, the pathloss RS of the power control parameter set is associated with a joint or uplink common TCI state associated with the first SRS resource set in the lowest codepoint of at least one codepoint indicating two joint or uplink common TCI states. Similarly, the joint or uplink common TCI state can be associated with the first SRS resource set by a RRC signaling or MAC CE or DCI.

In some scenario of the present application, whether a joint or uplink common TCI state is applicable for uplink transmission in the activated BWP in the slot is considered. For example, the pathloss RS of the power control parameter set is associated with a joint or uplink common TCI state, e.g., indicated by a DCI or a MAC CE applicable for uplink transmission in the activated BWP in the slot. In the case that there is only one joint or uplink common TCI state applicable for uplink transmission in the slot, the joint or uplink common TCI state is the only one joint or uplink common TCI state applicable for uplink transmission in the slot. In the case that there are two TCI states in a codepoint applicable for uplink transmission in the slot, the joint or uplink common TCI state is the first joint or uplink common TCI state of the two joint or uplink common TCI states in the codepoint.

In another example, in the case that a joint or uplink common TCI state, e.g., indicated by a DCI or a MAC CE applicable for uplink transmission in the activated BWP in the slot is associated the first SRS resource set, the pathloss RS of the power control parameter set is associated with the joint or uplink common TCI state associated the first SRS resource set. Similarly, the joint or uplink common TCI state can be associated with the first SRS resource set of two SRS resource sets by a RRC signaling or MAC CE or DCI.

In some yet other embodiments of the present application, the pathloss RS of the power control parameter set is a pathloss RS with an ID being 0 in a pathloss RS list configured for PUSCH transmission in the activated BWP.

### Determination of other power control parameters except for pathloss RS

Regarding other parameters except for the pathloss RS, only the key parameters, i.e., p0, alpha, and closed loop index are discussed herein. When there is only one PHR to be reported in a slot for an active BWP of a serving cell, which is a virtual PHR, p0, alpha and closed loop index of the power control parameter set can be determined in various manners according to some embodiments of the present application.

For example, in some embodiments of the present application, in the case that the first joint or uplink common TCI state in the lowest codepoint of at least one codepoint including at least one joint or uplink common TCI state of the one or more codepoints is associated with a set including p0, alpha, and closed loop index in a list of set including p0, alpha, and closed loop index configured for PUSCH transmission in the activated BWP, p0, alpha, and closed loop index of the power control parameter set are determined based on the set including p0, alpha, and closed loop index. Otherwise, p0, alpha, and closed loop index of the power control parameter set are determined based on a set including p0, alpha, and closed loop index with an index being 0 in the list.

An exemplary list of set including p0, alpha, and closed loop index is p0_Alpha_CLIdPUSCHSet specified in the current 3GPP specification, which is configured for PUSCH transmission of the activated BWP of the serving cell, and an exemplary set including p0, alpha, and closed loop index is a set with a p0_Alpha_CLIdPUSCHSetId of p0_Alpha_CLIdPUSCHSet, e.g., p0_Alpha_CLIdPUSCHSetId being 0 or 1. Thus, in some exemplary embodiments of the present application, if the first joint or uplink common TCI state of at least one joint or uplink common TCI state with the lowest codepoint is associated with a p0_Alpha_CLIdPUSCHSetId of p0_Alpha_CLIdPUSCHSet which is configured for PUSCH transmission of the activated BWP of the serving cell, then p0, alpha, and closed loop index of the power control parameter set are determined based on the p0_Alpha_CLIdPUSCHSetId associated with the first joint or uplink common TCI state. Otherwise, p0, alpha, and closed loop index of the power control parameter set are determined based on p0_Alpha_CLIdPUSCHSetId being 0 of p0_Alpha CLIdPUSCHSet.

According to some other embodiments of the present application, in the case that a joint or uplink common TCI state associated with the first SRS resource set in the lowest codepoint of at least one codepoint indicating a joint or uplink common TCI state associated with the first SRS resource set is associated with a set including p0, alpha, and closed loop index in a list of set including p0, alpha, and closed loop index configured for PUSCH transmission in the activated BWP, p0, alpha, and closed loop index of the power control parameter set are determined based on the set including p0, alpha, and closed loop index. Otherwise, p0, alpha, and closed loop index of the power control parameter set are determined based on a set including p0, alpha, and closed loop index with an index being 0 in the list. The joint or uplink common TCI state can be associated with the first SRS resource set by RRC signaling or MAC CE indication, or DCI etc.

For example, if a joint or uplink common TCI state associated with the first SRS resource set of at least one joint or uplink common TCI state with the lowest codepoint of at least one codepoint which contains a joint or uplink common TCI state associated with the first SRS resource set is associated with a p0_Alpha_CLIdPUSCHSetId of p0_Alpha_CLIdPUSCHSet which is configured for PUSCH transmission of the activated BWP of the serving cell, then p0, alpha, and closed loop index of the power control parameter set are determined based on a set with the p0_Alpha CLIdPUSCHSetId. Otherwise, p0, alpha, and closed loop index of the power control parameter set are determined based on p0_Alpha_CLIdPUSCHSetId being 0 of p0_Alpha_CLIdPUSCHSet.

According to some yet other embodiments of the present application, in the case that a joint or uplink common TCI state associated with the first SRS resource set in the lowest codepoint of at least one codepoint indicating two joint or uplink common TCI states is associated a set including p0, alpha, and closed loop index in a set of set including p0, alpha, and closed loop index configured for PUSCH transmission in the activated BWP, p0, alpha, and closed loop index of the power control parameter set are determined based on the set including p0, alpha, and closed loop index. Otherwise, p0, alpha, and closed loop index of the power control parameter set are determined based on a set including p0, alpha, and closed loop index with an index being 0 in the list. The joint or uplink common TCI state can be associated with the first SRS resource set by RRC signaling or MAC CE indication or DCI etc.

For example, if a joint or uplink common TCI state associated with the first SRS resource set of two joint or uplink common TCI states with the lowest codepoint of at least one TCI codepoint which contains two joint or uplink common TCI states is associated with a p0_Alpha_CLIdPUSCHSetId of p0_Alpha_CLIdPUSCHSet which is configured for PUSCH transmission of the activated BWP of the serving cell, p0, alpha, and closed loop index of the power control parameter set are determined based on the p0_Alpha_CLIdPUSCHSetId. Otherwise, p0, alpha, and closed loop index of the power control parameter set are determined based on p0_Alpha_CLIdPUSCHSetId being 0 of p0_Alpha_CLIdPUSCHSet.

According to some yet other embodiments of the present application, whether a joint or uplink common TCI state is applicable for uplink transmission of the activated BWP in the slot is considered. In the case that the first joint or uplink common TCI state in a codepoint, e.g., indicated by a DCI or a MAC CE applicable for uplink transmission of the activated BWP in the slot is associated a set including p0, alpha, and closed loop index in a list of set including p0, alpha, and closed loop index configured for PUSCH transmission in the activated BWP, p0, alpha, and closed loop index of the power control parameter set are determined based on the set including p0, alpha, and closed loop index. Otherwise, p0, alpha, and closed loop index of the power control parameter set are determined based on a set including p0, alpha, and closed loop index with an index being 0 in the list.

For example, if the first joint or uplink common TCI state of at least one joint or uplink common TCI state indicated by a DCI or a MAC CE is applicable for uplink transmission in the slot and is associated with a p0_Alpha_CLIdPUSCHSetId, p0, alpha, and closed loop index of the power control parameter set are determined based on the p0_Alpha_CLIdPUSCHSetId. Otherwise, p0, alpha, and closed loop index of the power control parameter set are determined based on p0_Alpha_CLIdPUSCHSetId being 0 of p0_Alpha_CLIdPUSCHSet which is configured for PUSCH transmission of the activated BWP of the serving cell.

According to some yet other embodiments of the present application, in the case that a joint or uplink common TCI state in a codepoint applicable for uplink transmission of the activated BWP in the slot is associated with the first SRS resource set and a set including p0, alpha, and closed loop index in a list of set including p0, alpha, and closed loop index configured for PUSCH transmission in the activated BWP, p0, alpha, and closed loop index of the power control parameter set are determined based on the set including p0, alpha, and closed loop index. Otherwise, p0, alpha, and closed loop index of the power control parameter set are determined based on a set including p0, alpha, and closed loop index with an index being 0 in the list. The joint or uplink common TCI state can be associated with the first SRS resource set by RRC signaling or MAC CE indication or DCI etc.

For example, if a joint or uplink common TCI state associated with the first SRS resource set of at least joint or uplink common TCI state indicated by a DCI or a MAC CE which is applicable for uplink transmission in the slot is associated with a p0_Alpha_CLIdPUSCHSetId, p0, alpha, and closed loop index of the power control parameter set are determined based on the p0_Alpha_CLIdPUSCHSetId. Otherwise, p0, alpha, and closed loop index of the power control parameter set are determined based on the p0_Alpha_CLIdPUSCHSetId of p0_Alpha_CLIdPUSCHSet which is configured for PUSCH transmission of the activated BWP of the serving cell. Otherwise, p0, alpha, and closed loop index of the power control parameter set are determined based on p0_Alpha_CLIdPUSCHSetId being 0 of p0_Alpha_CLIdPUSCHSet.

According to some yet other embodiments of the present application, p0, alpha, and closed loop index of the power control parameter set are determined based on a set including p0, alpha, and closed loop index with an index being 0 in a list of set including p0, alpha, and closed loop index configured for PUSCH transmission in the activated BWP.

For example, p0, alpha, and closed loop index of the power control parameter set are determined based on p0_Alpha_CLIdPUSCHSetId being 0 of p0_Alpha_CLIdPUSCHSet which is configured for PUSCH transmission of the activated BWP of the serving cell.

According to some yet other embodiments of the present application, regardless of p0 and alpha, closed loop index of the power control parameter set is always 0.

### Scenario: Two PHRs to be reported

In some scenarios, the UE is indicated to report two PHRs, e.g., by a RRC signaling. For example, the parameter "twoPHRMode" is enabled. That is, the UE needs to provide two Type 1 PHRs for an activated BWP of a serving cell in a slot according to a PHR triggering event. The two PHRs can be reported in a legacy procedure as specified in TS38.213 in a PHR MAC CE. Thus, besides how to determine two PHRs, how to determine the order of the two PHRs for the activated BWP of the serving cell in the PHR MAC CE is also solved in some embodiments of the present application.

Considering only virtual PHR being discussed herein, in the two PHR mode, one or two virtual PHRs will be determined. Therefore, two power control parameter sets need to be determined wherein each virtual PHR is determined according to a corresponding power control parameter set. Herein, the power control parameter set associated with the first SRS resource set is identified as the first power control parameter set, and the power control parameter set associated with the second SRS resource set is identified as the second power control parameter set.

Similarly, the determination of pathloss RS and power control parameters except for pathloss RS, e.g., p0, alpha, and closed loop index are separately illustrated.

### Determination of pathloss RS

When there two PHRs to be reported in a slot for an active BWP of a serving cell, which includes at least one virtual PHR, the pathloss RS of each power control parameter set can be determined in various manners according to some embodiments of the present application.

For example, in some embodiments of the present application, the pathloss RS of the first power control parameter set is associated a joint or uplink common TCI state associated with the first SRS resource set in the lowest codepoint of at least one TCI codepoint indicating two joint or uplink common TCI states, and a pathloss RS of the second power control parameter set is associated with a joint or uplink common TCI state associated with the second SRS resource set of two joint or uplink common TCI states in the lowest codepoint of the at least one TCI codepoint indicating two joint or uplink common TCI states.

In some other embodiments of the present application, whether there are two joint or uplink common TCI states indicated by a DCI or a MAC CE applicable for uplink transmission in the slot is determined firstly. In the case that there are two joint or uplink common TCI states applicable for uplink transmission of the activated BWP in the slot, the pathloss RS of the first power control parameter set is associated a joint or uplink common TCI state associated with the first SRS resource set of the two joint or uplink common TCI states, and the pathloss RS of the second power control parameter set is associated with a joint or uplink common TCI state associated with the second SRS resource set of the two joint or uplink common TCI states. Otherwise, the pathloss RS of the first power control parameter set is associated a joint or uplink common TCI state associated with the first SRS resource set in the lowest codepoint of the at least one TCI codepoint indicating two joint or uplink common TCI states, and the second pathloss RS of the second power control parameter set is associated with a joint or uplink common TCI state associated with the second SRS resource set of two joint or uplink common TCI states with the lowest codepoint of the at least one TCI codepoint indicating two joint or uplink common TCI states.

In some yet other embodiments of the present application, the pathloss RS of the first power control parameter set is a pathloss RS with an ID being 0 in a pathloss RS list configured for PUSCH transmission in the activated BWP, and the pathloss RS of the second power control parameter set is a pathloss RS with an ID being 1 in the pathloss RS list.

### Determination of other power control parameters except for pathloss RS

Similarly, regarding other parameters except for the pathloss RS, only the key parameters, i.e., p0, alpha, and closed loop index are discussed herein. When two PHRs including one or two virtual PHRs to be reported in a slot for an active BWP of a serving cell, p0, alpha and closed loop index of each power control parameter set can be determined in various manners according to some embodiments of the present application.

In some embodiments of the present application (Scheme 2-2-1), for the first power control parameter set, in the case that the first joint or uplink common TCI state associated with the first SRS resource set in the lowest codepoint of at least one TCI codepoint indicating two joint or uplink common TCI states is associated with a set including p0, alpha, and closed loop index in a list of set including p0, alpha, and closed loop index configured for PUSCH transmission in the activated BWP, p0, alpha, and closed loop index of the first power control parameter set are determined based on the set including p0, alpha, and closed loop index associated the first joint or uplink common TCI state. Otherwise, p0, alpha, and closed loop index of the first power control parameter set are determined based on a set including p0, alpha, and closed loop index with an ID being 0 in the list. For the second power control parameter set, in the case that the second joint or uplink common TCI state associated with the second SRS resource set in the lowest codepoint of the at least one TCI codepoint indicating two joint or uplink common TCI states is associated with a set including p0, alpha, and closed loop index in the list, p0, alpha, and closed loop index of the second power control parameter set are determined based on another set including p0, alpha, and closed loop index in the list associated with the second joint or uplink common TCI state. Otherwise, p0, alpha, and closed loop index of the second power control parameter set are determined based on a set including p0, alpha, and closed loop index with an ID being 1 in the list.

For example, for the first power control parameter set, in the case that the first joint or uplink common TCI state associated with the first SRS resource set of two joint or uplink common TCI states with the lowest codepoint of at least one codepoint containing two joint or uplink common TCI states is associated with a p0_Alpha_CLIdPUSCHSetId of p0_Alpha_CLIdPUSCHSet which is configured for PUSCH transmission of the activated BWP of the serving cell, p0, alpha, and closed loop index of the first power control parameter set are determined based on the p0_Alpha_CLIdPUSCHSetId which is associated with the first joint or uplink common TCI state. Otherwise, p0, alpha, and closed loop index of the first power control parameter set are determined based on p0_Alpha_CLIdPUSCHSetId being 0 of p0_Alpha_CLIdPUSCHSet.

For the second power control parameter set, in the case that the second joint or uplink common TCI state associated with the second SRS resource set of two joint or uplink common TCI states with the lowest codepoint of at least one codepoint containing two joint or uplink common TCI states is associated with a p0_Alpha_CLIdPUSCHSetId, p0, alpha, and closed loop index of the second power control parameter set are determined based on the p0_Alpha_CLIdPUSCHSetId which is associated with the second joint or uplink common TCI state. Otherwise, p0, alpha, and closed loop index of the second power control parameter set are determined based on p0_Alpha_CLIdPUSCHSetId being 1 of p0_Alpha_CLIdPUSCHSet.

In some other embodiments of the present application (Scheme 2-2-2), whether there are two joint or uplink common TCI states indicated by a DCI or a MAC CE applicable for uplink transmission in the slot will be determined firstly. If it is not in the case of two joint or uplink common TCI states applicable for uplink transmission in the slot, Scheme 2-2-1 illustrated above will be performed. If there are two joint or uplink common TCI states applicable for uplink transmission in the slot, then p0, alpha, and closed loop index of the first power control parameter set and the second power control parameter set will be determined as follows.

Firstly, for the first power control parameter set, in the case that the first joint or uplink common TCI state associated with the first SRS resource set of the two joint or uplink common TCI states is associated with a set including p0, alpha, and closed loop index in a list of set including p0, alpha, and closed loop index configured for PUSCH transmission in the activated BWP, p0, alpha, and closed loop index of the first power control parameter set are determined based on the set including p0, alpha, and closed loop index associated the first joint or uplink common TCI state. Otherwise, p0, alpha, and closed loop index of the first power control parameter set are determined based on a set including p0, alpha, and closed loop index with an ID being 0 in the list.

For the second power control parameter set, in the case that the second joint or uplink common TCI state associated with the second SRS resource set of the two joint or uplink common TCI states is associated with a set including p0, alpha, and closed loop index in the list, p0, alpha, and closed loop index of the second power control parameter set are determined based on the set including p0, alpha, and closed loop index associated the second joint or uplink common TCI state. Otherwise, p0, alpha, and closed loop index of the second power control parameter set are determined based on a set including p0, alpha, and closed loop index with an ID being 1 in the list.

For example, in the case that two joint or uplink common TCI states indicated by a DCI or a MAC CE are applicable for uplink transmission in the slot, if the first joint or uplink common TCI state associated with the first SRS resource set of the two joint or uplink common TCI states is associated with a *p0_Alpha_CLIdPUSCHSetId* of *p0_Alpha_CLIdPUSCHSet* which is configured for PUSCH transmission of the activated BWP of the serving cell, p0, alpha, and closed loop index of the first power control parameter set are determined based on the *p0_Alpha_CLIdPUSCHSetId.* Otherwise, p0, alpha, and closed loop index of the first power control parameter set are determined based on *p0_Alpha_CLIdPUSCHSetId* being 0 of *p0_Alpha_CLIdPUSCHSet.* If the second joint or uplink common TCI state associated with the second SRS resource set of the two joint or uplink common TCI states is associated with a *p0_Alpha_CLIdPUSCHSetId* of *p0_Alpha_CLIdPUSCHSet,* p0, alpha, and closed loop index of the second power control parameter set are determined based on the *p0_Alpha_CLIdPUSCHSetId.* Otherwise, p0, alpha, and closed loop index of the first power control parameter set are determined based on *p0_Alpha_CLIdPUSCHSetId* being 1 of *p0_Alpha_CLIdPUSCHSet.*

In some yet other embodiments of the present application, p0, alpha, and closed loop index of a first power control parameter set are determined based on a set including p0, alpha, and closed loop index with an ID being 0 in a list of set including p0, alpha, and closed loop index configured for PUSCH transmission in the activated BWP, and p0, alpha, and closed loop index of a second power control parameter set are determined based on another set including p0, alpha, and closed loop index with an ID being 1 in the list. For example, p0, alpha, and closed loop index of the first power control parameter set are determined based on *p0_Alpha_CLIdPUSCHSetId* being 0 of *p0_Alpha_CLIdPUSCHSet,* and p0, alpha, and closed loop index of the second power control parameter set are determined based on *p0_Alpha_CLIdPUSCHSetId* being 1 of *p0_Alpha_CLIdPUSCHSet.*

In some yet other embodiments of the present application, p0, alpha, and closed loop index of a first and second power control parameter set are both determined based on a set including p0, alpha, and closed loop index with an ID being 0 in a list of set including p0, alpha, and closed loop index configured for PUSCH transmission in the activated BWP. For example, p0, alpha, and closed loop index of the first and second power control parameter set are determined based on *p0_Alpha_CLIdPUSCHSetId* being 0 of *p0_Alpha_CLIdPUSCHSet.*

In some scenarios, close loop index may be determined independent from p0 and alpha.

For example, in some embodiments of the present application, regardless p0, alpha, closed loop index of both the first power control parameter set and the second power control parameter set is always determined as 0. While for p0 and alpha determination, they can be determined according to the embodiments described above.

In another example, regardless p0 and alpha, closed loop index of the first power control parameter set is always determined as 0. However, for closed loop index of the second power control parameter set, it is determined as 0 in the case of twoPUSCH-PC-AdjustmentStates not being configured (that is, UE does not support two close loop indexes), otherwise, is determined as 1 in the case of twoPUSCH-PC-AdjustmentStates being configured (that is, UE supports two close loop indexes). While for p0 and alpha determination, they can be determined according to the embodiments described above.

According to the power control parameter set, a virtual PHR can be determined accordingly. For example, the virtual PHR associated with the first SRS resource set can be determined according to the first power control parameter set and the virtual PHR associated with the second SRS resources set can be determined according to the second power control parameter set.

When one actual PHR and one virtual PHR are determined in the slot, the first PHR reported in the PHR MAC CE is the actual PHR and the second PHR reported in the PHR MAC CE is the virtual PHR. For example, if the actual PHR is based on a PUSCH which is associated with the first SRS resource set, then the virtual PHR is associated with the second SRS resource set and is determined according to the second power control parameter set. If the actual PHR is based on a PUSCH which is associated with the second SRS resource set, then the virtual PHR is associated with the first SRS resource set and is determined according to the first power control parameter set.

When two virtual PHRs are determined in the slot, the first PHR reported in the PHR MAC CE is the virtual PHR associated with the first SRS resource set and is determined according to the first power control parameter set, and the second PHR reported in the PHR MAC CE is the virtual PHR associated with the second SRS resource set and is determined according to the second power control parameter set.

Persons skilled in the art should well know that although up to two PHRs are illustrated, the illustrated schemes can also be applied to scenarios of reporting more than two PHRs as 3GPP develops, and should not limit the solution of the present application to the specific embodiments.

Besides the methods, embodiments of the present application also propose an apparatus of PHR reporting.

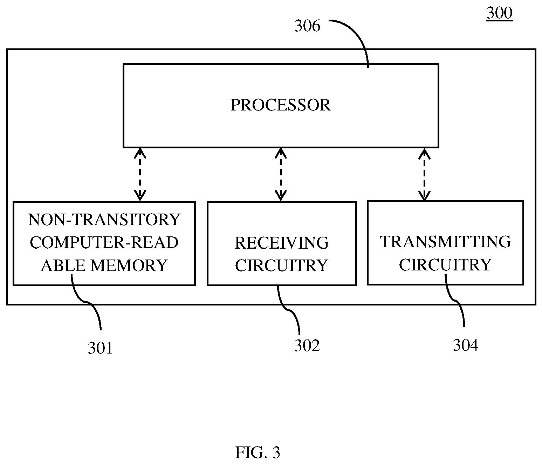

For example, FIG. 3 illustrates a block diagram of an apparatus of PHR reporting 300 according to some embodiments of the present application.

As shown in FIG. 3, the apparatus 300 may include at least one non-transitory computer-readable medium 301, at least one receiving circuitry 302, at least one transmitting circuitry 304, and at least one processor 306 coupled to the non-transitory computer-readable medium 301, the receiving circuitry 302 and the transmitting circuitry 304. The at least one processor 306 may be a CPU, a DSP, a microprocessor etc. The apparatus 300 may be a RAN node, e.g., a gNB or a remote apparatus, e.g., UE configured to perform a method illustrated in the above or the like.

Although in this figure, elements such as the at least one processor 306, transmitting circuitry 304, and receiving circuitry 302 are described in the singular, the plural is contemplated unless a limitation to the singular is explicitly stated. In some embodiments of the present application, the receiving circuitry 302 and the transmitting circuitry 304 can be combined into a single device, such as a transceiver. In certain embodiments of the present application, the apparatus 300 may further include an input device, a memory, and/or other components.

In some embodiments of the present application, the non-transitory computer-readable medium 301 may have stored thereon computer-executable instructions to cause a processor to implement the method with respect to the network apparatus as described above. For example, the computer-executable instructions, when executed, cause the processor 306 interacting with receiving circuitry 302 and transmitting circuitry 304, so as to perform the steps with respect to the RAN node or network apparatus, e.g., a gNB as depicted above.

In some embodiments of the present application, the non-transitory computer-readable medium 301 may have stored thereon computer-executable instructions to cause a processor to implement the method with respect to the UE as described above. For example, the computer-executable instructions, when executed, cause the processor 306 interacting with receiving circuitry 302 and transmitting circuitry 304, so as to perform the steps with respect to the UE as illustrated above.

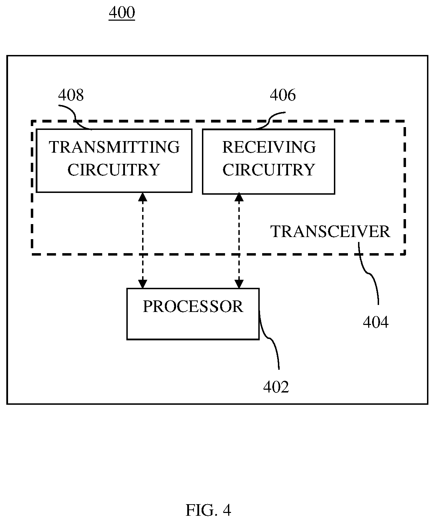

FIG. 4 is a block diagram of an apparatus of PHR reporting according to some other embodiments of the present application.

Referring to FIG. 4, the apparatus 400, for example a gNB or a UE may include at least one processor 402 and at least one transceiver 404 coupled to the at least one processor 402. The transceiver 404 may include at least one separate receiving circuitry 406 and transmitting circuitry 404, or at least one integrated receiving circuitry 406 and transmitting circuitry 404. The at least one processor 402 may be a CPU, a DSP, a microprocessor etc.

According to some embodiments of the present application, when the apparatus 400 is a remote apparatus, e.g., a UE, the processor is configured to: receive, via the transceiver, a signaling activating one or more codepoints respectively indicating at least one joint or uplink common TCI state for an activated BWP of a serving cell, wherein, at least one codepoint of the one or more codepoints indicates two joint or uplink common TCI states; and transmit, via the transceiver, at least one PHR in a slot for the activated BWP of the serving cell, wherein the at least one PHR includes at least one virtual PHR, each virtual PHR being determined based on a power control parameter set.

According to some other embodiments of the present application, when the apparatus 400 is a RAN node, e.g., a gNB, the processor may be configured to: transmit, via the transceiver, a signaling activating one or more codepoints respectively indicating at least one common TCI state for an activated BWP of a serving cell, wherein, at least one codepoint of the one or more codepoints indicates two joint or uplink common TCI states; and receive, via the transceiver, at least one PHR in a slot for the activated BWP of the serving cell, wherein the at least one PHR includes at least one virtual PHR, each virtual PHR being determined based on a power control parameter set.

The method according to embodiments of the present application can also be implemented on a programmed processor. However, the controllers, flowcharts, and modules may also be implemented on a general purpose or special purpose computer, a programmed microprocessor or microcontroller and peripheral integrated circuit elements, an integrated circuit, a hardware electronic or logic circuit such as a discrete element circuit, a programmable logic device, or the like. In general, any device capable of implementing the flowcharts shown in the figures may be used to implement the processor functions of this application. For example, an embodiment of the present application provides an apparatus, including a processor and a memory. Computer programmable instructions for implementing a method are stored in the memory, and the processor is configured to perform the computer programmable instructions to implement the method. The method may be a method as stated above or other method according to an embodiment of the present application.

An alternative embodiment preferably implements the methods according to embodiments of the present application in a non-transitory, computer-readable storage medium storing computer programmable instructions. The instructions are preferably executed by computer-executable components preferably integrated with a network security system. The non-transitory, computer-readable storage medium may be stored on any suitable computer readable media such as RAMs, ROMs, flash memory, EEPROMs, optical storage devices (CD or DVD), hard drives, floppy drives, or any suitable device. The computer-executable component is preferably a processor but the instructions may alternatively or additionally be executed by any suitable dedicated hardware device. For example, an embodiment of the present application provides a non-transitory, computer-readable storage medium having computer programmable instructions stored therein. The computer programmable instructions are configured to implement a method as stated above or other method according to an embodiment of the present application.

In addition, in this disclosure, the terms "includes," "including," or any other variation thereof, are intended to cover a non-exclusive inclusion, such that a process, method, article, or apparatus that includes a list of elements does not include only those elements but may include other elements not expressly listed or inherent to such process, method, article, or apparatus. An element proceeded by "a," "an," or the like does not, without more constraints, preclude the existence of additional identical elements in the process, method, article, or apparatus that includes the element. Also, the term "another" is defined as at least a second or more. The terms "having," and the like, as used herein, are defined as "including."

## Claims

1. A user equipment, UE, (105, 300) for wireless communication, the UE (105, 300) comprising:
at least one memory (301); and at least one processor (306) coupled with the at least one memory (301) and configured to cause the UE (105, 300) to:
receive (202) a signaling activating one or more codepoints respectively indicating at least one common transmission configuration indication, TCI, state for an activated bandwidth part, BWP, of a serving cell, wherein at least one codepoint of the one or more codepoints indicates two joint or uplink common TCI states; and
transmit (204) at least one power headroom report, PHR, in a slot for the activated BWP of the serving cell, wherein the at least one PHR includes at least one virtual PHR, each virtual PHR being determined based on a power control parameter set;
wherein two sounding reference signal, SRS, resource sets are configured for physical uplink shared channel, PUSCH, transmission in the activated BWP, and each SRS resource set is associated with a respective power control parameter set, wherein:
when there are two joint or uplink common TCI states applicable for uplink transmission in the slot:
for a first power control parameter set:
when a first joint or uplink common TCI state associated with a first SRS resource set of the two joint or uplink common TCI states is associated with a set including p0, alpha, and closed loop index in a list of sets including p0, alpha, and closed loop index configured for PUSCH transmission in the activated BWP, p0, alpha, and closed loop index of the first power control parameter set are determined based on the set including p0, alpha, and closed loop index associated the first joint or uplink common TCI state, and
for a second power control parameter set,
when a second joint or uplink common TCI state associated with a second SRS resource set of the two joint or uplink common TCI states is associated with a set including p0, alpha, and closed loop index in the list, p0, alpha, and closed loop index of the second power control parameter set are determined based on the set including p0, alpha, and closed loop index associated the second joint or uplink common TCI state,
wherein the first SRS resource set is an SRS resource set with a lower ID of the two SRS resource sets and the second SRS resource set is an SRS resource set with a higher ID of the two SRS resource sets.

2. The UE (105, 300) of claim 1, wherein two SRS resource sets are configured for PUSCH transmission in the activated BWP, and each SRS resource set is associated with the respective power control parameter set, wherein:
there are two joint or uplink common TCI states applicable for uplink transmission of the activated BWP in the slot,
a first pathloss reference signal, RS, of the first power control parameter set is associated with the joint or uplink common TCI state associated with the first SRS resource set of the two joint or uplink common TCI states, and
a second pathloss RS of the second power control parameter set is associated with the joint or uplink common TCI state associated with the second SRS resource set of the two joint or uplink common TCI states.

3. The UE (105, 300) of claim 1, wherein two PHRs including an actual PHR and the virtual PHR in the slot are transmitted, wherein:
when the actual PHR is determined based on PUSCH transmission associated with the first SRS resource set, the virtual PHR is associated with the second SRS resource set and determined based on a power control parameter set associated with the second SRS resource set, or
when the actual PHR is determined based on a PUSCH transmission associated with the second SRS resource set, the virtual PHR is associated with the first SRS resource set and determined based on the power control parameter set associated with the first SRS resource set.

4. The UE (105, 300) of claim 1, wherein two PHRs including two virtual PHRs in the slot are transmitted, wherein:
the two virtual PHRs are transmitted based on the first power control parameter set associated with the first SRS resource set of two SRS resource sets configured for PUSCH transmission in the activated BWP and the second power control parameter set associated with the other SRS resource set of the two SRS resource sets.

5. A method performed by a user equipment, UE, (105, 300), the method comprising:
receiving (202) a signaling activating one or more codepoints respectively indicating at least one common transmission configuration indication, TCI, state for an activated bandwidth part, BWP, of a serving cell, wherein at least one codepoint of the one or more codepoints indicates two joint or uplink common TCI states; and
transmitting (204) at least one power headroom report, PHR, in a slot for the activated BWP of the serving cell, wherein the at least one PHR includes at least one virtual PHR, each virtual PHR being determined based on a power control parameter set;
wherein two sounding reference signal, SRS, resource sets are configured for physical uplink shared channel, PUSCH, transmission in the activated BWP, and each SRS resource set is associated with a respective power control parameter set, wherein:
when there are two joint or uplink common TCI states applicable for uplink transmission in the slot:
for a first power control parameter set:
when a first joint or uplink common TCI state associated with a first SRS resource set of the two joint or uplink common TCI states is associated with a set including p0, alpha, and closed loop index in a list of sets including p0, alpha, and closed loop index configured for PUSCH transmission in the activated BWP, p0, alpha, and closed loop index of the first power control parameter set are determined based on the set including p0, alpha, and closed loop index associated the first joint or uplink common TCI state, and
for a second power control parameter set,
when a second joint or uplink common TCI state associated with a second SRS resource set of the two joint or uplink common TCI states is associated with a set including p0, alpha, and closed loop index in the list, p0, alpha, and closed loop index of the second power control parameter set are determined based on the set including p0, alpha, and closed loop index associated the second joint or uplink common TCI state,
wherein the first SRS resource set is an SRS resource set with a lower ID of the two SRS resource sets and the second SRS resource set is an SRS resource set with a higher ID of the two SRS resource sets.

6. The method of claim 5, wherein two SRS resource sets are configured for PUSCH transmission in the activated BWP, and each SRS resource set is associated with the respective power control parameter set, wherein:
there are two joint or uplink common TCI states applicable for uplink transmission of the activated BWP in the slot,
a first pathloss reference signal, RS, of the first power control parameter set is associated with the joint or uplink common TCI state associated with the first SRS resource set of the two joint or uplink common TCI states, and
a second pathloss RS of the second power control parameter set is associated with the joint or uplink common TCI state associated with the second SRS resource set of the two joint or uplink common TCI states.

7. The method of claim 5, wherein two PHRs including an actual PHR and a virtual PHR in the slot are transmitted, wherein:
when the actual PHR is determined based on PUSCH transmission associated with the first SRS resource set, the virtual PHR is associated with the second SRS resource set and determined based on the power control parameter set associated with the second SRS resource set, or
when the actual PHR is determined based on a PUSCH transmission associated with the second SRS resource set, the virtual PHR is associated with the first SRS resource set and determined based on the power control parameter set associated with the first SRS resource set.

8. The method of claim 5, wherein two PHRs including two virtual PHRs in the slot are transmitted, wherein:
the two virtual PHRs are transmitted based on the first power control parameter set associated with the first SRS resource set of two SRS resource sets configured for PUSCH transmission in the activated BWP and the second power control parameter set associated with the other SRS resource set of the two SRS resource sets.

9. A base station, BS, (101, 300), comprising:
at least one memory (301); and at least one processor (306) coupled with the at least one memory (301) and configured to cause the BS (101, 300) to:
transmit (201) a signaling activating one or more codepoints respectively indicating at least one common transmission configuration indication, TCI, state for an activated bandwidth part, BWP, of a serving cell, wherein at least one codepoint of the one or more codepoints indicates two joint or uplink common TCI states; and
receive (205) at least one power headroom report, PHR, in a slot for the activated BWP of the serving cell, wherein the at least one PHR includes at least one virtual PHR, each virtual PHR being determined based on a power control parameter set;
wherein two sounding reference signal, SRS, resource sets are configured for physical uplink shared channel, PUSCH, transmission in the activated BWP, and each SRS resource set is associated with a respective power control parameter set, wherein:
when there are two joint or uplink common TCI states applicable for uplink transmission in the slot:
for a first power control parameter set:
when a first joint or uplink common TCI state associated with a first SRS resource set of the two joint or uplink common TCI states is associated with a set including p0, alpha, and closed loop index in a list of sets including p0, alpha, and closed loop index configured for PUSCH transmission in the activated BWP, p0, alpha, and closed loop index of the first power control parameter set are determined based on the set including p0, alpha, and closed loop index associated the first joint or uplink common TCI state, and
for a second power control parameter set,
when a second joint or uplink common TCI state associated with a second SRS resource set of the two joint or uplink common TCI states is associated with a set including p0, alpha, and closed loop index in the list, p0, alpha, and closed loop index of the second power control parameter set are determined based on the set including p0, alpha, and closed loop index associated the second joint or uplink common TCI state,
wherein the first SRS resource set is an SRS resource set with a lower ID of the two SRS resource sets and the second SRS resource set is an SRS resource set with a higher ID of the two SRS resource sets.

10. A method performed by a base station, BS, (101, 300), the method comprising:
transmitting (201) a signaling activating one or more codepoints respectively indicating at least one common transmission configuration indication, TCI, state for an activated bandwidth part, BWP, of a serving cell, wherein at least one codepoint of the one or more codepoints indicates two joint or uplink common TCI states; and
receiving (205) at least one power headroom report, PHR, in a slot for the activated BWP of the serving cell, wherein the at least one PHR includes at least one virtual PHR, each virtual PHR being determined based on a power control parameter set;
wherein two sounding reference signal, SRS, resource sets are configured for physical uplink shared channel, PUSCH, transmission in the activated BWP, and each SRS resource set is associated with a respective power control parameter set, wherein:
when there are two joint or uplink common TCI states applicable for uplink transmission in the slot:
for a first power control parameter set:
when a first joint or uplink common TCI state associated with a first SRS resource set of the two joint or uplink common TCI states is associated with a set including p0, alpha, and closed loop index in a list of sets including p0, alpha, and closed loop index configured for PUSCH transmission in the activated BWP, p0, alpha, and closed loop index of the first power control parameter set are determined based on the set including p0, alpha, and closed loop index associated the first joint or uplink common TCI state, and
for a second power control parameter set,
when a second joint or uplink common TCI state associated with a second SRS resource set of the two joint or uplink common TCI states is associated with a set including p0, alpha, and closed loop index in the list, p0, alpha, and closed loop index of the second power control parameter set are determined based on the set including p0, alpha, and closed loop index associated the second joint or uplink common TCI state,
wherein the first SRS resource set is an SRS resource set with a lower ID of 5 the two SRS resource sets and the second SRS resource set is an SRS resource set with a higher ID of the two SRS resource sets.

## Patentansprüche

1. Endgerät, UE, (105, 300) zur drahtlosen Kommunikation, wobei das UE (105, 300) umfasst:
mindestens einen Speicher (301); und mindestens einen Prozessor (306), der mit dem mindestens einen Speicher (301) gekoppelt ist und dazu konfiguriert ist, das UE (105, 300) zu veranlassen zum:
Empfangen (202) einer Signalisierung, die einen oder mehrere Codepunkte aktiviert, die jeweils mindestens einen Zustand einer gemeinsamen Sendekonfigurationsangabe, TCI, für einen aktivierten Bandbreitenteil, BWP, einer bedienenden Zelle angeben, wobei mindestens ein Codepunkt von dem einen oder den mehreren Codepunkten zwei Zustände einer gemeinsamen Verbindungsstellen- oder Uplink-TCI angibt; und
Senden (204) mindestens eines Leistungsreserveberichts, PHR, an einem Sendeplatz für den aktivierten BWP der bedienenden Zelle, wobei der mindestens eine PHR mindestens einen virtuellen PHR umfasst, wobei jeder virtuelle PHR basierend auf einer Menge von Leistungsregelparametern bestimmt wird;
wobei zwei Ressourcenmengen von Sondierungsreferenzsignalen, SRS, für eine Sendung auf einem gemeinsam genutzten physikalischen Uplink-Kanal, PUSCH, in dem aktivierten BWP konfiguriert sind, und jede SRS-Ressourcenmenge einer jeweiligen Menge von Leistungsregelparametern zugeordnet ist, wobei:
wenn es zwei Zustände einer gemeinsamen Verbindungsstellen- oder Uplink-TCI gibt, die für eine Uplink-Sendung an dem Sendeplatz anwendbar sind:
für eine erste Menge von Leistungsregelparametern:
wenn ein erster Zustand einer gemeinsamen Verbindungsstellen- oder Uplink-TCI, der einer ersten SRS-Ressourcenmenge der beiden Zustände einer gemeinsamen Verbindungsstellen- oder Uplink-TCI zugeordnet ist, einer Menge zugeordnet ist, die p0, Alpha und einen Regelkreisindex in einer Liste von Mengen umfasst, die p0, Alpha und einen Regelkreisindex, der für eine PUSCH-Sendung in dem aktivierten BWP konfiguriert ist, umfassen, p0, Alpha und der Regelkreisindex der ersten Menge von Leistungsregelparametern basierend auf der Menge, die p0, Alpha und den Regelkreisindex, die dem ersten Zustand einer gemeinsamen Verbindungsstellen- oder Uplink-TCI zugeordnet sind, umfasst, bestimmt werden, und
für eine zweite Menge von Leistungsregelparametern,
wenn ein zweiter Zustand einer gemeinsamen Verbindungsstellen- oder Uplink-TCI, der einer zweiten SRS-Ressourcenmenge der beiden Zustände einer gemeinsamen Verbindungsstellen- oder Uplink-TCI einer Menge zugeordnet ist, die p0, Alpha und einen Regelkreisindex in der Liste umfasst, p0, Alpha und der Regelkreisindex der zweiten Menge von Leistungsregelparametern basierend auf der Menge, die p0, Alpha und den Regelkreisindex, die dem zweiten Zustand einer gemeinsamen Verbindungsstellen- oder Uplink-TCI zugeordnet sind, umfasst, bestimmt werden,
wobei die erste SRS-Ressourcenmenge eine SRS-Ressourcenmenge mit einer niedrigeren ID der beiden SRS-Ressourcenmengen ist, und die zweite SRS-Ressourcenmenge eine SRS-Ressourcenmenge mit einer höheren ID der beiden SRS-Ressourcenmengen ist.

2. UE (105, 300) nach Anspruch 1, wobei zwei SRS-Ressourcenmengen für eine PUSCH-Sendung in dem aktivierten BWP konfiguriert sind, und jede SRS-Ressourcenmenge der jeweiligen Menge von Leistungsregelparametern zugeordnet ist, wobei:
es zwei Zustände einer gemeinsamen Verbindungsstellen- oder Uplink-TCI gibt, die für eine Uplink-Sendung des aktivierten BWP an dem Sendeplatz anwendbar sind,
ein erstes Streckendämpfungs-Referenzsignal, RS, der ersten Menge von Leistungsregelparametern dem Zustand einer gemeinsamen Verbindungsstellen- oder Uplink-TCI zugeordnet ist, welcher der ersten SRS-Ressourcenmenge der beiden Zustände einer gemeinsamen Verbindungsstellen- oder Uplink-TCI zugeordnet ist, und
ein zweites Streckendämpfungs-RS der zweiten Menge von Leistungsregelparametern dem Zustand einer gemeinsamen Verbindungsstellen- oder Uplink-TCI zugeordnet ist, welcher der zweiten SRS-Ressourcenmenge der beiden Zustände einer gemeinsamen Verbindungsstellen- oder Uplink-TCI zugeordnet ist.

3. UE (105, 300) nach Anspruch 1, wobei zwei PHR, die einen realen PHR und einen virtuellen PHR an dem Sendeplatz umfassen, gesendet werden, wobei:
wenn der reale PHR basierend auf der PUSCH-Sendung, die der ersten SRS-Ressourcenmenge zugeordnet ist, bestimmt wird, der virtuelle PHR der zweiten SRS-Ressourcenmenge zugeordnet wird und basierend auf der Menge von Leistungsregelparametern, die der zweiten SRS-Ressourcenmenge zugeordnet sind, bestimmt wird, oder
wenn der reale PHR basierend auf einer PUSCH-Sendung bestimmt wird, die der zweiten SRS-Ressourcenmenge zugeordnet ist, der virtuelle PHR der ersten SRS-Ressourcenmenge zugeordnet wird und basierend auf der Menge von Leistungsregelparametern, die der ersten SRS-Ressourcenmenge zugeordnet sind, bestimmt wird.

4. UE (105, 300) nach Anspruch 1, wobei zwei PHR, die zwei virtuelle PHR umfassen, an dem Sendeplatz gesendet werden, wobei:
die beiden virtuellen PHR basierend auf der ersten Menge von Leistungsregelparametern, die der ersten SRS-Ressourcenmenge der beiden SRS-Ressourcenmengen zugeordnet sind, die für eine PUSCH-Sendung in dem aktivierten BWP konfiguriert sind, und auf der zweiten Menge von Leistungsregelparametern, die der anderen SRS-Ressourcenmenge der beiden SRS-Ressourcenmengen zugeordnet sind, gesendet werden.

5. Verfahren, das von einem Endgerät, UE, (105, 300), ausgeführt wird, wobei das Verfahren umfasst:
Empfangen (202) einer Signalisierung, die einen oder mehrere Codepunkte aktiviert, die jeweils mindestens einen Zustand einer gemeinsamen Sendekonfigurationsangabe, TCI, für einen aktivierten Bandbreitenteil, BWP, einer bedienenden Zelle angeben, wobei mindestens ein Codepunkt von dem einen oder den mehreren Codepunkten zwei Zustände einer gemeinsamen Verbindungsstellen- oder Uplink-TCI angibt; und
Senden (204) mindestens eines Leistungsreserveberichts, PHR, an einem Sendeplatz für den aktivierten BWP der bedienenden Zelle, wobei der mindestens eine PHR mindestens einen virtuellen PHR umfasst, wobei jeder virtuelle PHR basierend auf einer Menge von Leistungsregelparametern bestimmt wird;
wobei zwei Ressourcenmengen von Sondierungsreferenzsignalen, SRS, für eine Sendung auf einem gemeinsam genutzten physikalischen Uplink-Kanal, PUSCH, in dem aktivierten BWP konfiguriert sind, und jede SRS-Ressourcenmenge einer jeweiligen Menge von Leistungsregelparametern zugeordnet ist, wobei:
wenn es zwei Zustände einer gemeinsamen Verbindungsstellen- oder Uplink-TCI gibt, die für eine Uplink-Sendung an dem Sendeplatz anwendbar sind:
für eine erste Menge von Leistungsregelparametern:
wenn ein erster Zustand einer gemeinsamen Verbindungsstellen- oder Uplink-TCI, der einer ersten SRS-Ressourcenmenge der beiden Zustände einer gemeinsamen Verbindungsstellen- oder Uplink-TCI zugeordnet ist, einer Menge zugeordnet ist, die p0, Alpha und einen Regelkreisindex in einer Liste von Mengen umfasst, die p0, Alpha und einen Regelkreisindex, der für eine PUSCH-Sendung in dem aktivierten BWP konfiguriert ist, umfassen, p0, Alpha und der Regelkreisindex der ersten Menge von Leistungsregelparametern basierend auf der Menge, die p0, Alpha und den Regelkreisindex, die dem ersten Zustand einer gemeinsamen Verbindungsstellen- oder Uplink-TCI zugeordnet sind, umfasst, bestimmt werden, und
für eine zweite Menge von Leistungsregelparametern,
wenn ein zweiter Zustand einer gemeinsamen Verbindungsstellen- oder Uplink-TCI, der einer zweiten SRS-Ressourcenmenge der beiden Zustände einer gemeinsamen Verbindungsstellen- oder Uplink-TCI einer Menge zugeordnet ist, die p0, Alpha und einen Regelkreisindex in der Liste umfasst, p0, Alpha und der Regelkreisindex der zweiten Menge von Leistungsregelparametern basierend auf der Menge, die p0, Alpha und den Regelkreisindex, die dem zweiten Zustand einer gemeinsamen Verbindungsstellen- oder Uplink-TCI zugeordnet sind, umfasst, bestimmt werden,
wobei die erste SRS-Ressourcenmenge eine SRS-Ressourcenmenge mit einer niedrigeren ID der beiden SRS-Ressourcenmengen ist, und die zweite SRS-Ressourcenmenge eine SRS-Ressourcenmenge mit einer höheren ID der beiden SRS-Ressourcenmengen ist.

6. Verfahren nach Anspruch 5, wobei zwei SRS-Ressourcenmengen für eine PUSCH-Sendung in dem aktivierten BWP konfiguriert sind, und jede SRS-Ressourcenmenge der jeweiligen Menge von Leistungsregelparametern zugeordnet ist, wobei:
es zwei Zustände einer gemeinsamen Verbindungsstellen- oder Uplink-TCI gibt, die für eine Uplink-Sendung des aktivierten BWP an dem Sendeplatz anwendbar sind,
ein erstes Streckendämpfungs-Referenzsignal, RS, der ersten Menge von Leistungsregelparametern dem Zustand einer gemeinsamen Verbindungsstellen- oder Uplink-TCI zugeordnet ist, welcher der ersten SRS-Ressourcenmenge der beiden Zustände einer gemeinsamen Verbindungsstellen- oder Uplink-TCI zugeordnet ist, und
ein zweites Streckendämpfungs-RS der zweiten Menge von Leistungsregelparametern dem Zustand einer gemeinsamen Verbindungsstellen- oder Uplink-TCI zugeordnet ist, welcher der zweiten SRS-Ressourcenmenge der beiden Zustände einer gemeinsamen Verbindungsstellen- oder Uplink-TCI zugeordnet ist.

7. Verfahren nach Anspruch 5, wobei zwei PHR, die einen realen PHR und einen virtuellen PHR an dem Sendeplatz umfassen, gesendet werden, wobei:
wenn der reale PHR basierend auf der PUSCH-Sendung, die der ersten SRS-Ressourcenmenge zugeordnet ist, bestimmt wird, der virtuelle PHR der zweiten SRS-Ressourcenmenge zugeordnet wird und basierend auf einer Menge von Leistungsregelparametern, die der zweiten SRS-Ressourcenmenge zugeordnet sind, bestimmt wird, oder
wenn der reale PHR basierend auf einer PUSCH-Sendung bestimmt wird, die der zweiten SRS-Ressourcenmenge zugeordnet ist, der virtuelle PHR der ersten SRS-Ressourcenmenge zugeordnet wird und basierend auf der Menge von Leistungsregelparametern, die der ersten SRS-Ressourcenmenge zugeordnet sind, bestimmt wird.

8. Verfahren nach Anspruch 5, wobei zwei PHR, die zwei virtuelle PHRs an dem Sendeplatz umfassen, gesendet werden, wobei:
die beiden virtuellen PHR basierend auf der ersten Menge von Leistungsregelparametern, die der ersten SRS-Ressourcenmenge der beiden SRS-Ressourcenmengen zugeordnet sind, die für eine PUSCH-Sendung in dem aktivierten BWP konfiguriert sind, und auf der zweiten Menge von Leistungsregelparametern, die der anderen SRS-Ressourcenmenge der beiden SRS-Ressourcenmengen zugeordnet sind, gesendet werden.

9. Basisstation, BS, (101, 300), umfassend:
mindestens einen Speicher (301); und mindestens einen Prozessor (306), der mit dem mindestens einen Speicher (301) gekoppelt ist und dazu konfiguriert ist, die BS (101, 300) zu veranlassen zum:
Senden (201) einer Signalisierung, die einen oder mehrere Codepunkte umfasst, die jeweils mindestens einen Zustand einer gemeinsamen Sendekonfigurationsangabe, TCI, für einen aktivierten Bandbreitenteil, BWP, einer bedienenden Zelle angeben, wobei mindestens ein Codepunkt von dem einen oder den mehreren Codepunkten zwei Zustände einer gemeinsamen Verbindungsstellen- oder Uplink-TCI angibt; und
Empfangen (205) mindestens eines Leistungsreserveberichts, PHR, an einem Sendeplatz für den aktivierten BWP der bedienenden Zelle, wobei der mindestens eine PHR mindestens einen virtuellen PHR umfasst, wobei jeder virtuelle PHR basierend auf einer Menge von Leistungsregelparametern bestimmt wird;
wobei zwei Ressourcenmengen von Sondierungsreferenzsignalen, SRS, für eine Sendung auf einem gemeinsam genutzten physikalischen Uplink-Kanal, PUSCH, in dem aktivierten PWP konfiguriert sind, und jede SRS-Ressourcenmenge einer jeweiligen Menge von Leistungsregelparametern zugeordnet ist, wobei:
wenn es zwei Zustände einer gemeinsamen Verbindungsstellen- oder Uplink-TCI gibt, die auf eine Uplink-Sendung an dem Sendeplatz anwendbar sind:
für eine erste Menge von Leistungsregelparametern:
wenn ein erster Zustand einer gemeinsamen Verbindungsstellen- oder Uplink-TCI, der einer ersten SRS-Ressourcenmenge der beiden Zustände einer gemeinsamen Verbindungsstellen- oder Uplink-TCI zugeordnet ist, einer Menge zugeordnet ist, die p0, Alpha und einen Regelkreisindex in einer Liste von Mengen umfasst, die p0, Alpha und einen Regelkreisindex, der für eine PUSCH-Sendung in dem aktivierten BWP konfiguriert ist, umfassen, p0, Alpha und der Regelkreisindex der ersten Menge von Leistungsregelparametern basierend auf der Menge, die p0, Alpha und den Regelkreisindex, die dem ersten Zustand einer gemeinsamen Verbindungsstellen- oder Uplink-TCI zugeordnet sind, umfasst, bestimmt werden, und
für eine zweite Menge von Leistungsregelparametern,
wenn ein zweiter Zustand einer gemeinsamen Verbindungsstellen- oder Uplink-TCI, der einer zweiten SRS-Ressourcenmenge der beiden Zustände einer gemeinsamen Verbindungsstellen- oder Uplink-TCI einer Menge zugeordnet ist, die p0, Alpha und einen Regelkreisindex in der Liste umfasst, p0, Alpha und der Regelkreisindex der zweiten Menge von Leistungsregelparametern basierend auf der Menge, die p0, Alpha und den Regelkreisindex, die dem zweiten Zustand einer gemeinsamen Verbindungsstellen- oder Uplink-TCI zugeordnet sind, umfasst, bestimmt werden,
wobei die erste SRS-Ressourcenmenge eine SRS-Ressourcenmenge mit einer niedrigeren ID der beiden SRS-Ressourcenmengen ist, und die zweite SRS-Ressourcenmenge eine SRS-Ressourcenmenge mit einer höheren ID der beiden SRS-Ressourcenmengen ist.

10. Verfahren, das von einer Basisstation, BS, (101, 300), ausgeführt wird, wobei das Verfahren umfasst:
Senden (201) einer Signalisierung, die einen oder mehrere Codepunkte umfasst, die jeweils mindestens einen Zustand einer gemeinsamen Sendekonfigurationsangabe, TCI, für einen aktivierten Bandbreitenteil, BWP, einer bedienenden Zelle angeben, wobei mindestens ein Codepunkt von dem einen oder den mehreren Codepunkten zwei Zustände einer gemeinsamen Verbindungsstellen- oder Uplink-TCI angibt; und
Empfangen (205) mindestens eines Leistungsreserveberichts, PHR, an einem Sendeplatz für den aktivierten BWP der bedienenden Zelle, wobei der mindestens eine PHR mindestens einen virtuellen PHR umfasst, wobei jeder virtuelle PHR basierend auf einer Menge von Leistungsregelparametern bestimmt wird;
wobei zwei Ressourcenmengen von Sondierungsreferenzsignalen, SRS, für eine Sendung auf einem gemeinsam genutzten physikalischen Uplink-Kanal, PUSCH, in dem aktivierten PWP konfiguriert sind, und jede SRS-Ressourcenmenge einer jeweiligen Menge von Leistungsregelparametern zugeordnet ist, wobei:
wenn es zwei Zustände einer gemeinsamen Verbindungsstellen- oder Uplink-TCI gibt, die auf eine Uplink-Sendung an dem Sendeplatz anwendbar sind:
für eine erste Menge von Leistungsregelparametern:
wenn ein erster Zustand einer gemeinsamen Verbindungsstellen- oder Uplink-TCI, der einer ersten SRS-Ressourcenmenge der beiden Zustände einer gemeinsamen Verbindungsstellen- oder Uplink-TCI zugeordnet ist, einer Menge zugeordnet ist, die p0, Alpha und einen Regelkreisindex in einer Liste von Mengen umfasst, die p0, Alpha und einen Regelkreisindex, der für eine PUSCH-Sendung in dem aktivierten BWP konfiguriert ist, umfassen, p0, Alpha und der Regelkreisindex der ersten Menge von Leistungsregelparametern basierend auf der Menge, die p0, Alpha und den Regelkreisindex, die dem ersten Zustand einer gemeinsamen Verbindungsstellen- oder Uplink-TCI zugeordnet sind, umfasst, bestimmt werden, und
für eine zweite Menge von Leistungsregelparametern,
wenn ein zweiter Zustand einer gemeinsamen Verbindungsstellen- oder Uplink-TCI, der einer zweiten SRS-Ressourcenmenge der beiden Zustände einer gemeinsamen Verbindungsstellen- oder Uplink-TCI einer Menge zugeordnet ist, die p0, Alpha und einen Regelkreisindex in der Liste umfasst, p0, Alpha und der Regelkreisindex der zweiten Menge von Leistungsregelparametern basierend auf der Menge, die p0, Alpha und den Regelkreisindex, die dem zweiten Zustand einer gemeinsamen Verbindungsstellen- oder Uplink-TCI zugeordnet sind, umfasst, bestimmt werden,
wobei die erste SRS-Ressourcenmenge eine SRS-Ressourcenmenge mit einer niedrigeren ID der beiden SRS-Ressourcenmengen ist, und die zweite SRS-Ressourcenmenge eine SRS-Ressourcenmenge mit einer höheren ID der beiden SRS-Ressourcenmengen ist.

## Revendications

1. Equipement utilisateur, UE, (105, 300) pour communications sans fil, l'UE (105, 300) comprenant :
au moins une mémoire (301) ; et au moins un processeur (306) couplé à ladite au moins une mémoire (301) et configuré pour amener l'UE (105, 300) à :
recevoir (202) une signalisation activant un ou plusieurs points de code, indiquant respectivement au moins un état d'une indication de configuration d'émission, TCI, commune pour une partie de bande passante, BWP, activée d'une cellule de desserte, dans lequel au moins un point de code dudit un ou des plusieurs points de code indique deux états d'une TCI de jonction ou de liaison montante commune ; et
émettre (204) au moins un rapport de réserve de puissance, PHR, dans un créneau pour la BWP activée de la cellule de desserte, ledit au moins un PHR comprenant au moins un PHR virtuel, chaque PHR virtuel étant déterminé sur la base d'un ensemble de paramètres de commande de puissance ;
dans lequel deux ensembles de ressources de signal de référence de sondage, SRS, sont configurés pour une émission sur un canal partagé physique de liaison montante, PUSCH, dans la BWP activée, et chaque ensemble de ressources SRS est associé à un ensemble de paramètres de commande respectif, dans lequel :
lorsqu'il y a deux états d'une TCI de jonction ou de liaison montante commune applicables pour une émission de liaison montante dans le créneau :
pour un premier ensemble de paramètres de commande de puissance :
lorsqu'un premier état d'une TCI de jonction ou de liaison montante commune, associé à un premier ensemble de ressources SRS, des deux états d'une TCI de jonction ou de liaison montante commune est associé à un ensemble comprenant p0, alpha et un indice de boucle fermée dans une liste d'ensembles comprenant p0, alpha et un indice de boucle fermée configurés pour une émission PUSCH dans la BWP activée, p0, alpha et l'indice de boucle fermée du premier ensemble de paramètres de commande de puissance sont déterminés sur la base de l'ensemble comprenant p0, alpha et l'indice de boucle fermée, associé au premier état d'une TCI de jonction ou de liaison montante commune, et
pour un deuxième ensemble de paramètres de commande de puissance,
lorsqu'un deuxième état d'une TCI de jonction ou de liaison montante commune, associé à un deuxième ensemble de ressources SRS, des deux états d'une TCI de jonction ou de liaison montante commune est associé à un ensemble comprenant p0, alpha et un indice de boucle fermée dans la liste, p0, alpha et l'indice de boucle fermée du deuxième ensemble de paramètres de commande de puissance sont déterminés sur la base de l'ensemble comprenant p0, alpha et l'indice de boucle fermée, associé au deuxième état d'une TCI de jonction ou de liaison montante commune,
dans lequel le premier ensemble de ressources SRS est un ensemble de ressources SRS avec une ID inférieure des deux ensembles de ressources SRS, et le deuxième ensemble de ressources SRS est un ensemble de ressources SRS avec une ID supérieure des deux ensembles de ressources SRS.

2. UE (105, 300) selon la revendication 1, dans lequel deux ensembles de ressources SRS sont configurés pour une émission PUSCH dans la BWP activée, et chaque ensemble de ressources SRS est associé à l'ensemble de paramètres de commande de puissance respectif, dans lequel :
il y a deux états d'une TCI de jonction ou de liaison montante commune applicables pour une émission de liaison montante de la BWP activée dans le créneau,
un premier signal de référence d'affaiblissement de propagation, RS, du premier ensemble de paramètres de commande de puissance est associé à l'état d'une TCI de jonction ou de liaison montante commune, associé au premier ensemble de ressources SRS des deux états d'une TCI de jonction ou de liaison montante commune, et
un deuxième RS d'affaiblissement de propagation du deuxième ensemble de paramètres de commande de puissance est associé à l'état d'une TCI de jonction ou de liaison montante commune, associé au deuxième ensemble de ressources SRS des deux états d'une TCI de jonction ou de liaison montante commune.

3. UE (105, 300) selon la revendication 1, dans lequel deux PHR comprenant un PHR réel et le PHR virtuel dans le créneau sont émis, dans lequel :
lorsque le PHR réel est déterminé sur la base de l'émission PUSCH associée au premier ensemble de ressources SRS, le PHR virtuel est associé au deuxième ensemble de ressources SRS et déterminé sur la base d'un ensemble de paramètres de commande de puissance associé au deuxième ensemble de ressources SRS, ou
lorsque le PHR réel est déterminé sur la base d'une émission PUSCH associée au deuxième ensemble de ressources SRS, le PHR virtuel est associé au premier ensemble de ressources SRS et déterminé sur la base de l'ensemble de paramètres de commande de puissance associé au premier ensemble de ressources SRS.

4. UE (105, 300) selon la revendication 1, dans lequel deux PHR comprenant deux PHR virtuels dans le créneau sont émis, dans lequel :
les deux PHR virtuels sont émis sur la base du premier ensemble de paramètres de commande de puissance associé au premier ensemble de ressources SRS de deux ensembles de ressources SRS configurés pour une émission PUSCH dans la BWP activée et du deuxième ensemble de paramètres de commande de puissance associé à l'autre ensemble de ressources SRS des deux ensembles de ressources SRS.

5. Procédé effectué par un équipement utilisateur, UE, (105, 300), le procédé comprenant les étapes consistant à :
recevoir (202) une signalisation activant un ou plusieurs points de code, indiquant respectivement au moins un état d'une indication de configuration d'émission, TCI, commune pour une partie de bande passante, BWP, activée d'une cellule de desserte, dans lequel au moins un point de code dudit un ou des plusieurs points de code indique deux états d'une TCI de jonction ou de liaison montante commune ; et
émettre (204) au moins un rapport de réserve de puissance, PHR, dans un créneau pour la BWP activée de la cellule de desserte, ledit au moins un PHR comprenant au moins un PHR virtuel, chaque PHR virtuel étant déterminé sur la base d'un ensemble de paramètres de commande de puissance ;
dans lequel deux ensembles de ressources de signal de référence de sondage, SRS, sont configurés pour une émission sur un canal partagé physique de liaison montante, PUSCH, dans la BWP activée, et chaque ensemble de ressources SRS est associé à un ensemble de paramètres de commande respectif, dans lequel :
lorsqu'il y a deux états d'une TCI de jonction ou de liaison montante commune applicables pour une émission de liaison montante dans le créneau :
pour un premier ensemble de paramètres de commande de puissance :
lorsqu'un premier état d'une TCI de jonction ou de liaison montante commune, associé à un premier ensemble de ressources SRS, des deux états d'une TCI de jonction ou de liaison montante commune est associé à un ensemble comprenant p0, alpha et un indice de boucle fermée dans une liste d'ensembles comprenant p0, alpha et un indice de boucle fermée, configurés pour une émission PUSCH dans la BWP activée, p0, alpha et l'indice de boucle fermée du premier ensemble de paramètres de commande de puissance sont déterminés sur la base de l'ensemble comprenant p0, alpha et l'indice de boucle fermée, associé au premier état d'une TCI de jonction ou de liaison montante commune, et
pour un deuxième ensemble de paramètres de commande de puissance,
lorsqu'un deuxième état d'une TCI de jonction ou de liaison montante commune, associé à un deuxième ensemble de ressources SRS, des deux états d'une TCI de jonction ou de liaison montante commune est associé à un ensemble comprenant p0, alpha et un indice de boucle fermée dans la liste, p0, alpha et l'indice de boucle fermée du deuxième ensemble de paramètres de commande de puissance sont déterminés sur la base de l'ensemble comprenant p0, alpha et l'indice de boucle fermée, associé au deuxième état d'une TCI de jonction ou de liaison montante commune,
dans lequel le premier ensemble de ressources SRS est un ensemble de ressources SRS avec une ID inférieure des deux ensembles de ressources SRS, et le deuxième ensemble de ressources SRS est un ensemble de ressources SRS avec une ID supérieure des deux ensembles de ressources SRS.

6. Procédé selon la revendication 5, dans lequel deux ensembles de ressources SRS sont configurés pour une émission PUSCH dans la BWP activée, et chaque ensemble de ressources SRS est associé à l'ensemble de paramètres de commande de puissance respectif, dans lequel :
il y a deux états d'une TCI de jonction ou de liaison montante commune applicables pour une émission de liaison montante de la BWP activée dans le créneau,
un premier signal de référence d'affaiblissement de propagation, RS, du premier ensemble de paramètres de commande de puissance est associé à l'état d'une TCI de jonction ou de liaison montante commune, associé au premier ensemble de ressources SRS des deux états d'une TCI de jonction ou de liaison montante commune, et
un deuxième RS d'affaiblissement de propagation du deuxième ensemble de paramètres de commande de puissance est associé à l'état d'une TCI de jonction ou de liaison montante commune, associé au deuxième ensemble de ressources SRS des deux états d'une TCI de jonction ou de liaison montante commune.

7. Procédé selon la revendication 5, dans lequel deux PHR comprenant un PHR réel et un PHR virtuel dans le créneau sont émis, dans lequel :
lorsque le PHR réel est déterminé sur la base de l'émission PUSCH associée au premier ensemble de ressources SRS, le PHR virtuel est associé au deuxième ensemble de ressources SRS et déterminé sur la base de l'ensemble de paramètres de commande de puissance associé au deuxième ensemble de ressources SRS, ou
lorsque le PHR réel est déterminé sur la base d'une émission PUSCH associée au deuxième ensemble de ressources SRS, le PHR virtuel est associé au premier ensemble de ressources SRS et déterminé sur la base de l'ensemble de paramètres de commande de puissance associé au premier ensemble de ressources SRS.

8. Procédé selon la revendication 5, dans lequel deux PHR comprenant deux PHR virtuels dans le créneau sont émis, dans lequel :
les deux PHR virtuels sont émis sur la base du premier ensemble de paramètres de commande de puissance associé au premier ensemble de ressources SRS de deux ensembles de ressources SRS configurés pour une émission PUSCH dans la BWP activée, et du deuxième ensemble de paramètres de commande de puissance associé à l'autre ensemble de ressources SRS des deux ensembles de ressources SRS.

9. Station de base, BS, (101, 300), comprenant :
au moins une mémoire (301) ; et au moins un processeur (306) couplé à ladite au moins une mémoire (301) et configuré pour amener la BS (101, 300) à :
émettre (201) une signalisation activant un ou plusieurs points de code indiquant respectivement au moins un état d'une indication de configuration d'émission, TCI, commune pour une partie de bande passante, BWP, activée d'une cellule de desserte, dans laquelle au moins un point de code dudit un ou des plusieurs points de code indique deux états d'une TCI de jonction ou de liaison montante commune ; et
recevoir (205) au moins un rapport de réserve de puissance, PHR, dans un créneau pour la BWP activée de la cellule de desserte, dans laquelle ledit au moins un PHR comprend au moins un PHR virtuel, chaque PHR virtuel étant déterminé sur la base d'un ensemble de paramètres de commande de puissance ;
dans laquelle deux ensembles de ressources de signal de référence de sondage, SRS, sont configurés pour une émission sur un canal partagé physique de liaison montante, PUSCH, dans la BWP activée, et chaque ensemble de ressources SRS est associé à un ensemble de paramètres de commande de puissance respectif, dans laquelle :
lorsqu'il y a deux états d'une TCI de jonction ou de liaison montante commune applicables pour une émission de liaison montante dans le créneau :
pour un premier ensemble de paramètres de commande de puissance :
lorsqu'un premier état d'une TCI de jonction ou de liaison montante commune, associé à un premier ensemble de ressources SRS, des deux états d'une TCI de jonction ou de liaison montante commune est associé à un ensemble comprenant p0, alpha et un indice de boucle fermée dans une liste d'ensembles comprenant p0, alpha et un indice de boucle fermée, configurés pour une émission PUSCH dans la BWP activée, p0, alpha et l'indice de boucle fermée du premier ensemble de paramètres de commande de puissance sont déterminés sur la base de l'ensemble comprenant p0, alpha et l'indice de boucle fermée, associé au premier état d'une TCI de jonction ou de liaison montante commune, et
pour un deuxième ensemble de paramètres de commande de puissance,
lorsqu'un deuxième état d'une TCI de jonction ou de liaison montante commune, associé à un deuxième ensemble de ressources SRS, des deux états d'une TCI de jonction ou de liaison montante commune est associé à un ensemble comprenant p0, alpha et un indice de boucle fermée dans la liste, p0, alpha et l'indice de boucle fermée du deuxième ensemble de paramètres de commande de puissance sont déterminés sur la base de l'ensemble comprenant p0, alpha et l'indice de boucle fermée, associé au deuxième état d'une TCI de jonction ou de liaison montante commune,
dans laquelle le premier ensemble de ressources SRS est un ensemble de ressources SRS avec une ID inférieure des deux ensembles de ressources SRS, et le deuxième ensemble de ressources SRS est un ensemble de ressources SRS avec une ID supérieure des deux ensembles de ressources SRS.

10. Procédé effectué par une station de base, BS, (101, 300), le procédé comprenant les étapes consistant à :
émettre (201) une signalisation activant un ou plusieurs points de code indiquant respectivement au moins un état d'une indication de configuration d'émission, TCI, commune pour une partie de bande passante, BWP, activée d'une cellule de desserte, dans lequel au moins un point de code dudit un ou des plusieurs points de code indique deux états d'une TCI de jonction ou de liaison montante commune ; et
recevoir (205) au moins un rapport de réserve de puissance, PHR, dans un créneau pour la BWP activée de la cellule de desserte, dans lequel ledit au moins un PHR comprend au moins un PHR virtuel, chaque PHR virtuel étant déterminé sur la base d'un ensemble de paramètres de commande de puissance ;
dans lequel deux ensembles de ressources de signal de référence de sondage, SRS, sont configurés pour une émission sur un canal partagé physique de liaison montante, PUSCH, dans la BWP activée, et chaque ensemble de ressources SRS est associé à un ensemble de paramètres de commande de puissance respectif, dans lequel :
lorsqu'il y a deux états d'une TCI de jonction ou de liaison montante commune applicables pour une émission de liaison montante dans le créneau :
pour un premier ensemble de paramètres de commande de puissance :
lorsqu'un premier état d'une TCI de jonction ou de liaison montante commune, associé à un premier ensemble de ressources SRS, des deux états d'une TCI de jonction ou de liaison montante commune est associé à un ensemble comprenant p0, alpha et un indice de boucle fermée dans une liste d'ensembles comprenant p0, alpha et un indice de boucle fermée, configurés pour une émission PUSCH dans la BWP activée, p0, alpha et l'indice de boucle fermée du premier ensemble de paramètres de commande de puissance sont déterminés sur la base de l'ensemble comprenant p0, alpha et l'indice de boucle fermée, associé au premier état d'une TCI de jonction ou de liaison montante commune, et
pour un deuxième ensemble de paramètres de commande de puissance,
lorsqu'un deuxième état d'une TCI de jonction ou de liaison montante commune, associé à un deuxième ensemble de ressources SRS, des deux états d'une TCI de jonction ou de liaison montante commune est associé à un ensemble comprenant p0, alpha et un indice de boucle fermée dans la liste, p0, alpha et l'indice de boucle fermée du deuxième ensemble de paramètres de commande de puissance sont déterminés sur la base de l'ensemble comprenant p0, alpha et l'indice de boucle fermée, associé au deuxième état d'une TCI de jonction ou de liaison montante commune,
dans lequel le premier ensemble de ressources SRS est un ensemble de ressources SRS avec une ID inférieure des deux ensembles de ressources SRS, et le deuxième ensemble de ressources SRS est un ensemble de ressources SRS avec une ID supérieure des deux ensembles de ressources SRS.
